# EUROPEAN PATENT APPLICATION

(11) **EP 4 746 430 A1**
(43) Date of publication of application: **20.05.2026**
(21) Application number: 24909917.7
(22) Date of filing: 29.08.2024
(51) Int. Cl.: H04N 23/55, H04N 23/68, H04N 23/54, G02B 27/64

(54) **LENS DRIVING APPARATUS, CAMERA MODULE AND ELECTRONIC DEVICE**

(30) Priority: 29.12.2023 CN 202323665909 U
(71) Applicant: Huawei Technologies Co., Ltd., Shenzhen, Guangdong 518129 (CN)
(72) Inventor: HUANG, Changfu, Shenzhen, Guangdong 518129 (CN); HOU, Qing, Shenzhen, Guangdong 518129 (CN); LI, Dengfeng, Shenzhen, Guangdong 518129 (CN); LIU, Bin, Shenzhen, Guangdong 518129 (CN); QIN, Shixin, Shenzhen, Guangdong 518129 (CN)
(74) Representative: Pfenning, Meinig & Partner mbB
(86) International application number: PCT/CN2024/115411
(87) International publication number: WO 2025/138967

(57) **Abstract**

This application relates to the field of camera technologies, and provides a lens driving apparatus, a camera module, and an electronic device, to resolve a problem in a related technology that a circuit design of a camera module of an electronic device is relatively complex. The lens driving apparatus includes a base, a moving base, a lens carrier, a variable aperture, a focus driving device, and an image stabilization driving device. The moving base is disposed on the base; the lens carrier is disposed on the moving base, and the lens carrier is configured to mount an optical lens; the variable aperture is disposed on a side, of the lens carrier, away from the base; the focus driving device is configured to drive the lens carrier to move relative to the moving base in an axial direction of the variable aperture; and the image stabilization driving device is configured to drive the moving base to move relative to the base in a direction perpendicular to the axial direction. The base has a plurality of corner portions in a circumferential direction, at least two of the corner portions are provided with first pins, and the first pins are electrically connected to the variable aperture and the focus driving device through a connection line. This application may be applied to an electronic device such as a mobile phone.

## Description

This application claims priority to Chinese Patent Application No. 202323665909.2, filed with the China National Intellectual Property Administration on December 29, 2023 and entitled "LENS DRIVING APPARATUS, CAMERA MODULE, AND ELECTRONIC DEVICE", which is incorporated herein by reference in its entirety.

### TECHNICAL FIELD

This application relates to the field of camera technologies, and in particular, to a lens driving apparatus, a camera module, and an electronic device.

### BACKGROUND

Currently, electronic devices such as a mobile phone and a tablet computer need to maintain stable photographing quality in different luminance conditions. To achieve this objective, some camera modules are provided with variable apertures (Variable Aperture, VA for short) on light inlet sides of optical lenses. A size of a light transmission hole of the variable aperture is variable. In a high-luminance environment, the size of the light transmission hole may be reduced, so that a relatively small amount of light rays enter the optical lens. In a low-luminance environment, the size of the light transmission hole may be increased, so that a relatively large amount of light rays enter the optical lens. In this way, an amount of light admitted of the optical lens is adjusted, and photographing quality is ensured.

In addition, some camera modules are further integrated with driving motors, and the driving motors are configured to drive optical lenses to move, to implement autofocus (automatic focusing, AF) and optical image stabilization (optical image stabilization, OIS), thereby ensuring photographing definition of the electronic device.

For a camera module integrated with both a variable aperture and a driving motor, because there are many driving components, how to simplify a circuit design of the camera module has become one of important topics in the industry.

### SUMMARY

Embodiments of this application provide a lens driving apparatus, a camera module, and an electronic device, to resolve a problem in a related technology that a circuit design of a camera module of an electronic device is relatively complex.

To achieve the foregoing objectives, the following technical solutions are used in embodiments of this application.

According to a first aspect, an embodiment of this application provides a lens driving apparatus. The lens driving apparatus includes a base, a moving base, a lens carrier, a variable aperture, a focus driving device, and an image stabilization driving device. The moving base is disposed on the base; the lens carrier is disposed on the moving base, and the lens carrier is configured to mount an optical lens; the variable aperture is disposed on a side of the lens carrier away from the base; the focus driving device is configured to drive the lens carrier to move relative to the moving base in an axial direction of the variable aperture; and the image stabilization driving device is configured to drive the moving base to move relative to the base in a direction perpendicular to the axial direction. The base has a plurality of corner portions in a circumferential direction, at least two of the corner portions are provided with first pins, the first pins have a first connection terminal and a second connection terminal, the first connection terminal is electrically connected to the variable aperture and the focus driving device through a connection line, and the second connection terminal is an external terminal.

According to the lens driving apparatus provided in this embodiment of this application, a plurality of first pins are arranged at the plurality of corner portions of the base. In this way, the first pins can be easily electrically connected to the connection line, and there is no need to arrange a conductive member and an intermediate connection line between the first pins and the connection line, thereby simplifying circuit design of the lens driving apparatus, simplifying circuit design of an entire camera module, and improving working reliability of a circuit of the camera module.

In some embodiments, the first pins are embedded in the base, the first connection terminal is exposed from a surface of the base and is connected to the connection line, and the second connection terminal extends out of the base. In this way, the first pins may be prevented from occupying extra space outside the base, and the base may further protect an embedded part of the first pins.

In some embodiments, the connection line includes a connection contact, a first terminal, a second terminal, a first elastic wire, a focus wire, and a second elastic wire. The connection contact is connected to the first connection terminal. The first terminal is disposed on the moving base, the first terminal is electrically connected to the connection contact through the first elastic wire, and the first terminal is electrically connected to the focus driving device through the focus wire. The second terminal is disposed on the lens carrier and is electrically connected to the variable aperture, and the second terminal is electrically connected to the first terminal through the second elastic wire. In this way, the first elastic wire has an electrical connection function, and the first elastic wire may also provide a reset force for the moving base. The second elastic wire has an electrical connection function, and the second elastic wire may also provide a reset force for the lens carrier.

In some embodiments, the connection line further includes a conversion terminal and a conversion wire, where the conversion terminal is disposed on the moving base, the conversion wire is connected between the first terminal and the conversion terminal, and the second elastic wire is connected between the conversion terminal and the second terminal. Such arrangement facilitates arrangement of the first terminal and the first elastic wire.

In some embodiments, the conversion wire is at least partially embedded in the moving base. In this way, space, occupied by the conversion wire, outside the moving base may be reduced, and the moving base may also protect an embedded part of the conversion wire.

In some embodiments, the focus driving device includes a first control unit and a focus driver electrically connected to the first control unit, where the focus driver is configured to drive the lens carrier to move relative to the moving base in the axial direction, the focus wire is electrically connected to the first control unit, and the first control unit is disposed on a side wall of the moving base. In this way, space occupied by the first control unit on the moving base in the direction perpendicular to the axial direction may be reduced.

In some embodiments, the focus wire is embedded in the moving base, the focus wire is provided with a control unit connection terminal, and the control unit connection terminal is exposed from the side wall of the moving base and is electrically connected to the first control unit. In this way, space, occupied by the focus wire, outside the moving base may be reduced, and the moving base may also protect an embedded part of the focus wire.

In some embodiments, a side edge of the base is provided with a second pin, the second pin is electrically connected to the image stabilization driving device, the side edge is further provided with first pins, and the first pins are separately disposed at corner portions on two sides of the second pin. In this way, the first pins and the second pin are arranged in a relatively compact manner, so that the first pins and the second pin are electrically connected to a module circuit board.

In some embodiments, the side edge includes a first side edge and a second side edge that are adjacently disposed; image stabilization driving devices are respectively disposed on the first side edge and the second side edge, the image stabilization driving device on the first side edge is configured to drive the moving base to move relative to the base in a first direction, the image stabilization driving device on the second side edge is configured to drive the moving base to move relative to the base in a second direction, and the first direction, the second direction, and the axial direction are mutually perpendicular; and the first side edge and the second side edge are respectively provided with second pins, the second pin and the image stabilization driving device that are located on the first side edge are electrically connected, and the second pin and the image stabilization driving device that are located on the second side edge are electrically connected. In this way, the first pins and the second pins may be disposed on the first side edge and the second side edge of the base in a centralized manner, so that the first pins and the second pins are electrically connected to the module circuit board.

In some embodiments, the image stabilization driving device includes an image stabilization driver and a second position sensor, the image stabilization driver is configured to drive the moving base to move relative to the base in the direction perpendicular to the axial direction, and the first position sensor is configured to detect a position of the moving base relative to the base in the direction perpendicular to the axial direction. The second pins include a plurality of sub-pins, a part of the sub-pins are electrically connected to the first position sensor, and another part of the sub-pins are electrically connected to the image stabilization driver. In this way, the image stabilization driving device may be controlled by the control unit on the module circuit board, and no control component needs to be disposed in the image stabilization driving device, thereby helping simplify a structure of the image stabilization driving device.

In some embodiments, the side edge includes a first side edge and a second side edge that are adjacently disposed; image stabilization driving devices are respectively disposed on the first side edge and the second side edge, the image stabilization driving device on the first side edge is configured to drive the moving base to move relative to the base in a first direction, the image stabilization driving device on the second side edge is configured to drive the moving base to move relative to the base in a second direction, and the first direction, the second direction, and the axial direction are mutually perpendicular; and the first side edge or the second side edge is provided with a second pin, and the second pins are separately electrically connected to the image stabilization driving devices located on the first side edge and the second side edge. In this way, a number of sub-pins of the second pins may be reduced, thereby further simplifying the circuit design of the camera module.

In some embodiments, the image stabilization driving device includes a second control unit and an image stabilization driver electrically connected to the second control unit, where the image stabilization driver is configured to drive the moving base to move relative to the base in the direction perpendicular to the axial direction, the second pin includes a plurality of sub-pins, and each sub-pin is electrically connected to the second control unit. In this way, the image stabilization driver is controlled by the second control unit instead of the control unit on the module circuit board, which can reduce an operation amount of the control unit.

In some embodiments, the second control unit includes a second controller and a second position sensor, the second position sensor and the image stabilization driver are separately electrically connected to the second controller, and the second position sensor is configured to detect a position of the moving base relative to the base in the direction perpendicular to the axial direction. In this way, the second control unit can perform closed-loop control on the image stabilization driver, so that closed-loop control on the image stabilization driving device is more accurate.

In some embodiments, the variable aperture and the focus driving device form a first module, and at least a part of the first pins are shared pins of the first module and the second control unit. In this way, a number of pins of the lens driving apparatus may be further reduced, thereby simplifying the circuit design of the camera module.

In some embodiments, the focus driving device includes the first control unit and the focus driver electrically connected to the first control unit, where the focus driver is configured to drive the lens carrier to move relative to the moving base in the axial direction; the image stabilization driving device includes a second control unit and an image stabilization driver electrically connected to the second control unit, where the image stabilization driver is configured to drive the moving base to move relative to the base in the direction perpendicular to the axial direction; the variable aperture includes a third control unit and an aperture driver electrically connected to the third control unit, where the aperture driver is configured to drive the variable aperture to change a light flux; and a part of the first pins are shared pins, and are all electrically connected to the first control unit, the second control unit, and the third control unit, and another part of the first pins are all electrically connected to the first control unit and the third control unit. In this way, the variable aperture, the focus driving device, and the image stabilization driving device may be controlled by control modules of the variable aperture, the focus driving device, and the image stabilization driving device, and do not need to be controlled by a control unit on the module circuit board. Therefore, no control unit needs to be disposed on the module circuit board, thereby saving space on the module circuit board, and simplifying circuit design on the module circuit board.

In some embodiments, the first control unit includes a first controller and a first position sensor, where the first position sensor and the focus driver are separately electrically connected to the first controller, and the first position sensor is configured to detect a position of the lens carrier relative to the moving base in the axial direction; the second control unit includes a second controller and a second position sensor, the second position sensor and the image stabilization driver are separately electrically connected to the second controller, and the second position sensor is configured to detect a position of the moving base in the direction perpendicular to the axial direction; the variable aperture includes an aperture base, an aperture rotor disposed on the aperture base, and a blade disposed on the aperture rotor, where the aperture driver is configured to drive the aperture rotor to rotate relative to the aperture base, and the blade is movable along with the aperture rotor to change the light flux; and the third control unit includes a third controller and a third position sensor, the third position sensor and the aperture driver are separately electrically connected to the third controller, and the third position sensor is configured to detect a position of the aperture rotor relative to the aperture base. In this way, the first control unit can perform closed-loop control on the focus driver, the second control unit can perform closed-loop control on the image stabilization driver, and the third control unit can perform closed-loop control on the aperture driver, so that focus control of the focus driving device, adjustment control of an F-number of the variable aperture, and image stabilization control of the image stabilization driving device are more accurate.

According to a second aspect, an embodiment of this application provides a camera module. The camera module includes an optical lens, a photosensitive element, a module circuit board, and the lens driving apparatus according to the first aspect, where the lens driving apparatus and the photosensitive element are both disposed on the module circuit board, and the photosensitive element is located on an image side of the optical lens.

Beneficial effects of the camera module in this embodiment of this application are the same as beneficial effects of the lens driving apparatus in the first aspect. Details are not described herein again.

In some embodiments, a control unit and an external terminal are disposed on the module circuit board, and the control unit is separately electrically connected to the external terminal, and the variable aperture, the focus driving device, and the image stabilization driving device of the lens driving apparatus. In this way, the control unit may be used as a calculation module, to reduce a control calculation amount of at least one of the variable aperture, the focus driving device, and the image stabilization driving device.

In some embodiments, a control unit and an external terminal are disposed on the module circuit board, the control unit is separately electrically connected to the external terminal, and the variable aperture and the focus driving device of the lens driving apparatus, and the image stabilization driving device of the lens driving apparatus is electrically connected to the external terminal through a first connection wire on the module circuit board. In this way, the image stabilization driving device may be controlled by using a control module of the image stabilization driving device instead of the control unit on the module circuit board, which can reduce an operation amount of the control unit, thereby helping the control unit better control the variable aperture and the focus driving device.

In some embodiments, an external terminal is disposed on the module circuit board, and the variable aperture, the focus driving device, and the image stabilization driving device of the lens driving apparatus are electrically connected to the external terminal through a second connection wire on the module circuit board. In this way, the variable aperture, the focus driving device, and the image stabilization driving device may be controlled by control modules of the variable aperture, the focus driving device, and the image stabilization driving device, instead of being controlled by a control unit on the module circuit board. Therefore, no control unit needs to be disposed on the module circuit board, thereby saving space on the module circuit board, and also simplifying circuit design on the module circuit board.

According to a third aspect, an embodiment of this application provides an electronic device, including a housing and the camera module according to the second aspect. The camera module is disposed on the housing.

Beneficial effects of the electronic device in this embodiment of this application are the same as beneficial effects of the lens driving apparatus in the first aspect. Details are not described herein again.

According to a fourth aspect, an embodiment of this application provides an electronic device, including a processor and the camera module according to the second aspect. The external terminal of the camera module is electrically connected to the processor.

Beneficial effects of the electronic device in this embodiment of this application are the same as beneficial effects of the lens driving apparatus in the first aspect. Details are not described herein again.

### BRIEF DESCRIPTION OF DRAWINGS

FIG. 1 is a diagram of a structure of a camera module of an electronic device in a related technology;
FIG. 2 is an A-A sectional view of the camera module in FIG. 1;
FIG. 3 is a diagram of a back of an electronic device according to some embodiments of this application;
FIG. 4 is a B-B sectional view of the electronic device shown in FIG. 3;
FIG. 5 is a diagram of a structure of a camera module according to a first embodiment of this application;
FIG. 6 is a diagram of a structure of the camera module in FIG. 5 after a case is removed;
FIG. 7 is a C-C sectional view of the camera module in FIG. 6;
FIG. 8 is an exploded view of the camera module in FIG. 6 in a view angle;
FIG. 9 is an exploded view of the camera module in FIG. 6 in another view angle;
FIG. 10 is a diagram of a structure of a variable aperture of the camera module 300 in FIG. 6;
FIG. 11 is an exploded view of the variable aperture in FIG. 10;
FIG. 12 is a D-D sectional view of the variable aperture in FIG. 10;
FIG. 13 is a diagram of a structure of the variable aperture in FIG. 10 after a top panel is removed;
FIG. 14 is an E-E sectional view of the variable aperture in FIG. 10;
FIG. 15 is a diagram of a structure of the camera module in FIG. 6 after a variable aperture, a module circuit board, and an optical lens are removed;
FIG. 16 is a diagram of a moving base of the camera module in FIG. 15 in a view angle;
FIG. 17 is a diagram of a connection line on the moving base in FIG. 16;
FIG. 18 is a diagram of a moving base of the camera module in FIG. 15 in another view angle;
FIG. 19 is a diagram of a structure of a lens carrier of the camera module in FIG. 15;
FIG. 20 is an F-F sectional view of FIG. 15;
FIG. 21 is an exploded view of the moving base and a base of the camera module in FIG. 15 in a view angle;
FIG. 22 is an exploded view of the moving base and a base of the camera module in FIG. 15 in another view angle;
FIG. 23 is a diagram of mounting the base and a slide base in FIG. 21 together;
FIG. 24 is a diagram of a structure of a bottom of the moving base of the camera module in FIG. 21;
FIG. 25 is a diagram of a structure of the base shown in FIG. 23 after an image stabilization driving coil and the slide base are removed;
FIG. 26 is an exploded view of the base in FIG. 25 and pins disposed on the base;
FIG. 27 is an architectural diagram of a connection between a camera module according to a first embodiment of this application and a processor of an electronic device;
FIG. 28 is a schematic of a circuit connection between a camera module according to a first embodiment of this application and a processor of an electronic device;
FIG. 29 is a diagram of composition of a first control unit and a third control unit in FIG. 28;
FIG. 30A and FIG. 30B are a control flowchart of a camera module according to a first embodiment of this application;
FIG. 31 is an architectural diagram of a connection between a camera module according to a second embodiment of this application and a processor of an electronic device;
FIG. 32 is a schematic of a circuit connection between a camera module according to a second embodiment of this application and a processor of an electronic device;
FIG. 33 is a diagram of composition of a first control unit, a second control unit, and a third control unit in FIG. 32;
FIG. 34A and FIG. 34B are a control flowchart of a camera module according to a second embodiment of this application;
FIG. 35 is an architectural diagram of a connection between a camera module according to a third embodiment of this application and a processor of an electronic device;
FIG. 36 is a schematic of a circuit connection between a camera module according to a third embodiment of this application and a processor of an electronic device; and
FIG. 37 is a control flowchart of a camera module according to a third embodiment of this application.

### DESCRIPTION OF EMBODIMENTS

Technical solutions in some embodiments of this application are clearly and completely described below with reference to accompanying drawings.

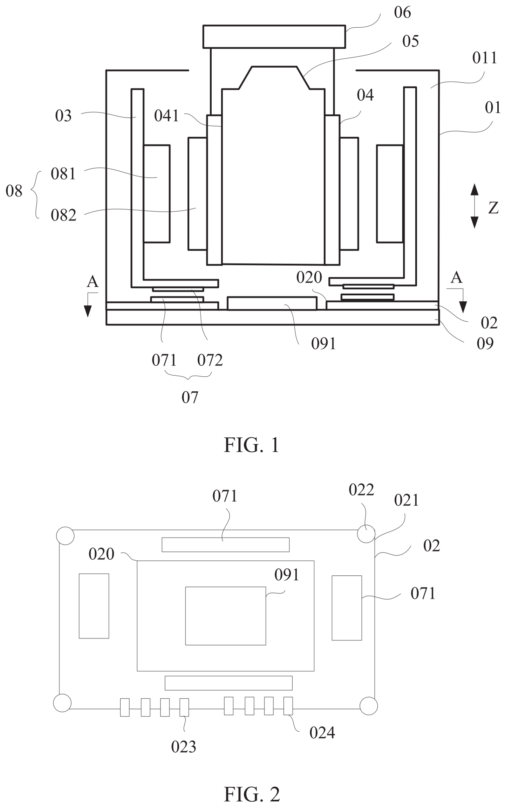

FIG. 1 is a diagram of a structure of a camera module of an electronic device in a related technology. As shown in FIG. 1, the camera module includes a case 01, a base 02, a moving base 03, a lens carrier 04, an optical lens 05, a variable aperture 06, an image stabilization driver 07, a focus driver 08, and a circuit board 09.

The base 02 is disposed on the circuit board 09, and a photosensitive element 091 is disposed on the circuit board 09. The photosensitive element 091 is located in an avoidance opening 020 on the base 02, and the photosensitive element 091 is located on an image side of the optical lens 05.

The case 01 is disposed on the base 02, and the case 01 and the base 02 form a housing cavity 011. Both the moving base 03 and the lens carrier 04 are disposed in the housing cavity 011. The moving base 03 is disposed on the base 02. The lens carrier 04 is disposed on the moving base 03. A lens mounting hole 041 is disposed on the lens carrier 04. The optical lens 05 is mounted in the lens mounting hole 041.

The focus driver 08 is configured to drive the lens carrier 04 to move relative to the moving base 03 in an axial direction Z of the variable aperture 06. The focus driver 08 includes a focus driving coil 081 disposed on the moving base 03 and a first magnet 082 disposed on the lens carrier 04. During focusing, the focus driving coil 081 is powered on, and a magnetic field of the first magnet 082 interacts with the focus driving coil 081, so that the lens carrier 04 moves in the axial direction Z, thereby driving the optical lens 05 to move in the axial direction Z, to implement focusing of the camera module.

The image stabilization driver 07 is configured to drive the moving base 03 to move relative to the base 02 in a direction perpendicular to the axial direction Z. The image stabilization driver 07 includes an image stabilization driving coil 071 disposed on the base 02 and a second magnet 072 disposed on the moving base 03. During image stabilization, the image stabilization driving coil 071 is powered on, and a magnetic field of the second magnet 072 interacts with the image stabilization driving coil 071, so that the moving base 03 moves in the direction perpendicular to the axial direction Z, thereby driving the optical lens 05 to move in the direction perpendicular to the axial direction Z, to implement image stabilization of the camera module.

The variable aperture 06 is disposed on the lens carrier 04, and is located on a light inlet side of the optical lens 05. The variable aperture 06 is configured to adjust an amount of light admitted by the optical lens 05.

FIG. 2 is an A-A sectional view of the camera module in FIG. 1. As shown in FIG. 2, the base 02 has a plurality of corner portions 021 in a circumferential direction, each corner portion 021 is provided with a conductive member 022, and the conductive member 022 at each corner portion 021 is electrically connected to the variable aperture 06 and the focus driver 08. A plurality of first pins 023 disposed side by side and a plurality of second pins 024 disposed side by side are disposed on a side edge of the base 02, the first pins 023 and the second pins 024 are electrically connected to the circuit board 09, the plurality of first pins 023 are connected to a plurality of conductive members 022 in a one-to-one correspondence manner, and the plurality of second pins 024 are electrically connected to the image stabilization driver 07.

In the camera module in the related technology, because the first pins 023 are disposed side by side on a side edge of the base 02, so that the first pins 023 are relatively far away from conductive members 022 at corner portions 021, and an intermediate connection wire needs to be arranged between the first pins 023 and the conductive members 022, to implement an electrical connection between the first pins 023 and the conductive members 022. However, the intermediate connection wire is arranged, which makes circuit design of the camera module relatively complex, and it is not conducive to improving working reliability of a circuit of the camera module.

Therefore, embodiments of this application provide a lens driving apparatus, a camera module, and an electronic device. A plurality of first pins are arranged at a plurality of corner portions of a base, so that no need to dispose a conductive member or an intermediate connection line, thereby simplifying the circuit of the camera module, and improving working reliability of the circuit of the camera module.

The electronic device in embodiments of this application may be a mobile phone, a tablet computer, a wearable device (such as a smartwatch, a smart band, smart glasses, or smart jewelry), a vehicle-mounted device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), or another electronic device having a camera module.

Composition of the camera module of the electronic device in embodiments of this application is described below by using a mobile phone as an example. For details of another type of electronic device, refer to composition of a camera module in the embodiment of the mobile phone. Details are not described herein again.

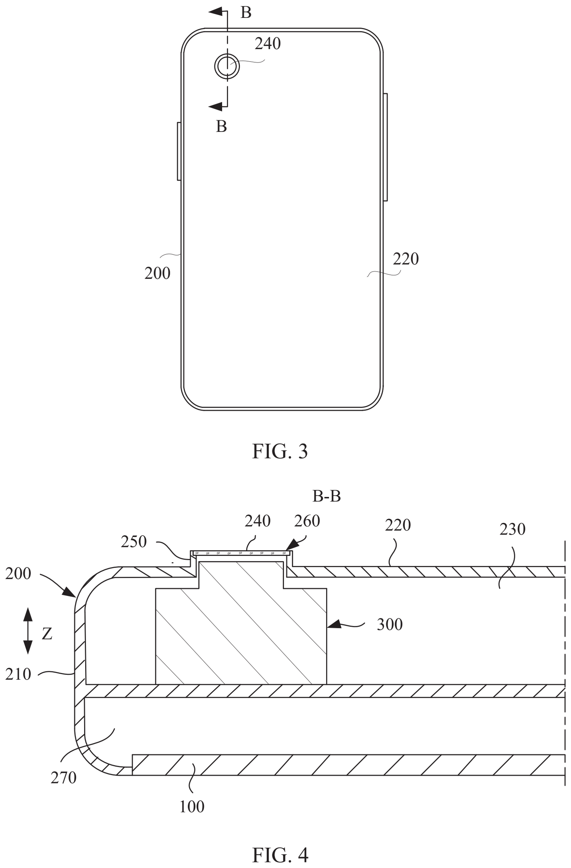

FIG. 3 is a diagram of a back of an electronic device according to some embodiments of this application. FIG. 4 is a B-B sectional view of the electronic device shown in FIG. 3. As shown in FIG. 3 and FIG. 4, the electronic device is a mobile phone, and includes a housing 200, a display 100, and a camera module 300. The camera module 300 is disposed on the housing 200.

In some embodiments, as shown in FIG. 4, the housing 200 includes a middle frame 210 (also referred to as a front housing or a front frame) and a rear cover 220 (also referred to as a battery cover). The display 100 and the rear cover 220 are respectively mounted on two opposite sides of the middle frame 210, and the rear cover 220 and the middle frame 210 enclose first accommodation space 230.

The camera module 300 is a rear-facing camera module and is disposed in the first accommodation space 230. A light inlet end of the camera module 300 is disposed opposite to a photographing window 240 disposed on the rear cover 220, to ensure that the camera module 300 can receive light rays emitted by a photographed object outside the housing 200.

The photographing window 240 may be directly disposed on the rear cover 220. As shown in FIG. 4, the photographing window 240 may alternatively be disposed on a camera decoration part 250. Specifically, the camera decoration part 250 is disposed on the rear cover 220, an opening is provided on a side of the camera decoration part 250, a protection cover 260 is disposed at the opening, and a clear aperture region of the protection cover 260 is the photographing window 240. As shown in FIG. 4, the camera decoration part 250 and the rear cover 220 may be of an integrated structure, but this is not limited thereto. The camera decoration part 250 and the rear cover 220 may alternatively be designed separately.

The display 100 and the middle frame 210 enclose second accommodation space 270. An electronic component such as a mainboard is disposed in the second accommodation space 270, and the mainboard is electrically connected to the display 100 and the camera module 300.

The middle frame 210 and the rear cover 220 may be detachably connected, or may be of an integrated structure. This is not specifically limited herein. The display 100 may be a liquid crystal display 100, or may be an OLED (Organic Light-Emitting Diode, organic light-emitting diode) display 100. This is not specifically limited herein.

The camera module 300 in this embodiment of this application may be mounted at a position on an upper left corner, a middle position on an upper side edge, or a position on an upper right corner on a back of the electronic device. This is not specifically limited herein. The camera module 300 may be mounted on the back of the electronic device and used as the rear-facing camera module 300. In addition, the camera module 300 may also be installed in the second accommodation space 270. In this case, the camera module 300 is used as a front-facing camera module of the electronic device.

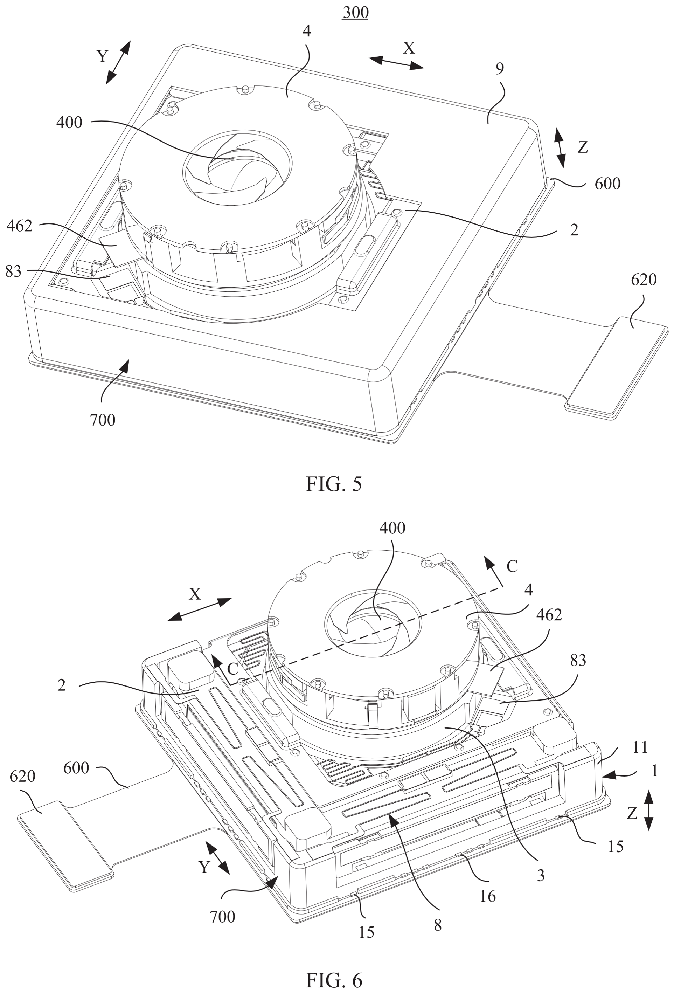

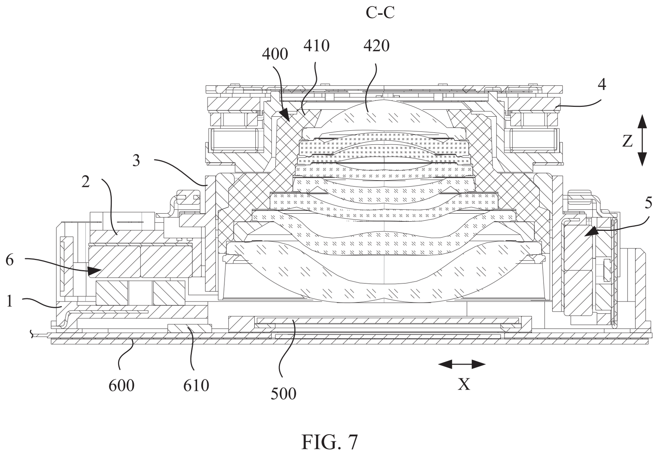

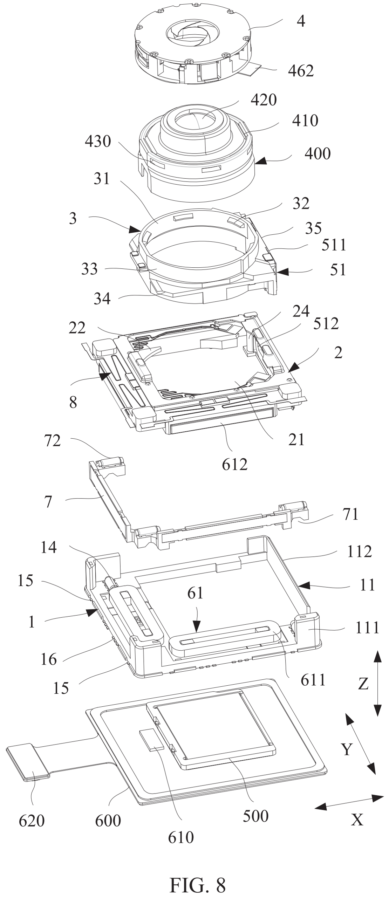

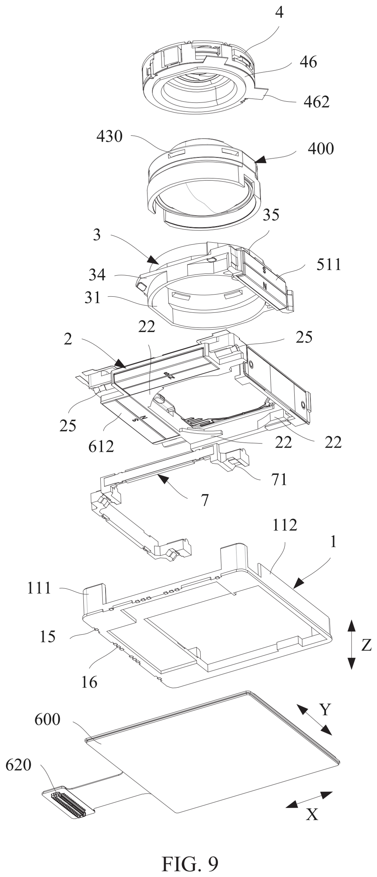

FIG. 5 is a diagram of a structure of a camera module 300 according to a first embodiment of this application. FIG. 6 is a diagram of a structure of the camera module 300 in FIG. 5 after a case is removed. FIG. 7 is a C-C sectional view of the camera module 300 in FIG. 6. FIG. 8 is an exploded view of the camera module 300 in FIG. 6 in a view angle. FIG. 9 is an exploded view of the camera module 300 in FIG. 6 in another view angle.

As shown in FIG. 5 to FIG. 9, the camera module 300 includes an optical lens 400, a photosensitive element 500, a module circuit board 600, and a lens driving apparatus 700, where the lens driving apparatus 700 and the photosensitive element 500 are both disposed on the module circuit board 600, and the photosensitive element 500 is located on an image side of the optical lens 400.

As shown in FIG. 7 and FIG. 8, the optical lens 400 includes a lens barrel 410 and a plurality of lenses 420 disposed in the lens barrel. The optical lens 400 mainly performs imaging by using a refraction principle of the lenses 420. That is, light rays on an object pass through the optical lens 400 to form a clear image of the object on a focal plane, and an image of the object is recorded by using the photosensitive element 500 located on the focal plane.

As shown in FIG. 7, a photosensitive surface of the photosensitive element 500 is disposed facing a light output end (for example, a lower end of the optical lens 400 in FIG. 7) of the optical lens 400, to receive light rays passing through the optical lens 400. The photosensitive element 500 may be a charge coupled device (charge coupled device, CCD for short), or may be a complementary metal oxide semiconductor (Complementary Metal Oxide Semiconductor, CMOS for short). This is not specifically limited herein.

As shown in FIG. 4 and FIG. 5, the module circuit board 600 is electrically connected to a mainboard of the electronic device. The module circuit board 600 is a flexible circuit board, but this is not limited thereto. The module circuit board 600 may alternatively be a rigid circuit board (that is, a hard board).

As shown in FIG. 7, FIG. 8, and FIG. 9, the lens driving apparatus 700 includes a base 1, a moving base 2, a lens carrier 3, a variable aperture 4, a focus driving device 5, and an image stabilization driving device 6.

The base 1 is disposed on the module circuit board 600, the moving base 2 is disposed on the base 1, the lens carrier 3 is disposed on the moving base 2, and the lens carrier 3 is configured to mount the optical lens 400. The variable aperture 4 is disposed on a side of the lens carrier 3 away from the base 1. The focus driving device 5 is configured to drive the lens carrier 3 to move relative to the moving base 2 in an axial direction Z of the variable aperture 4. The image stabilization driving device 6 is configured to drive the moving base 2 to move relative to the base 1 in a direction perpendicular to the axial direction Z. Herein, "perpendicular" in the direction perpendicular to the axial direction Z may be absolute vertical, or may be approximately vertical (with a deviation within 3 degrees).

In some embodiments, as shown in FIG. 5 and FIG. 6, the lens driving apparatus 700 further includes a case 9. The case 9 is disposed on the base 1, and the case 9 and the base 1 form accommodation space. The accommodation space is configured to accommodate the moving base 2, the lens carrier 3, the focus driving device 5, and the image stabilization driving device 6.

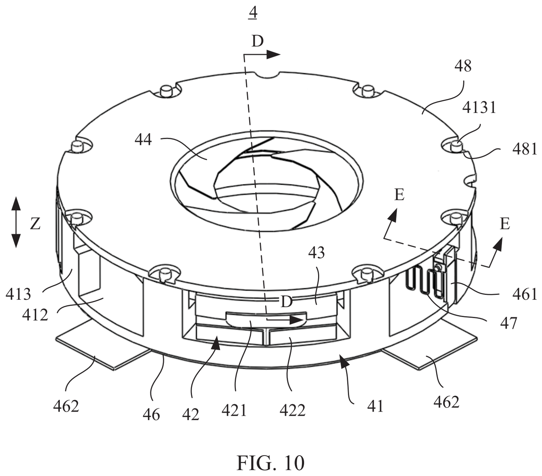

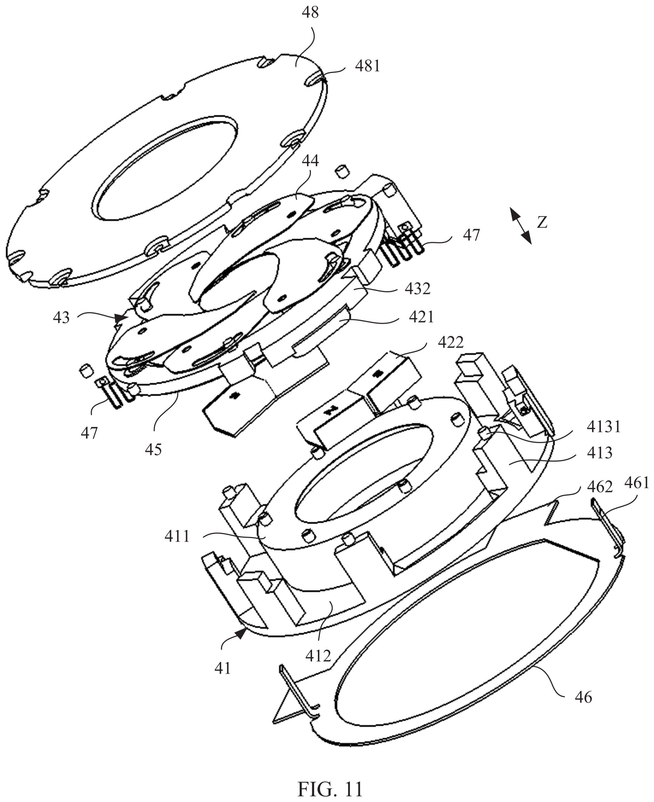

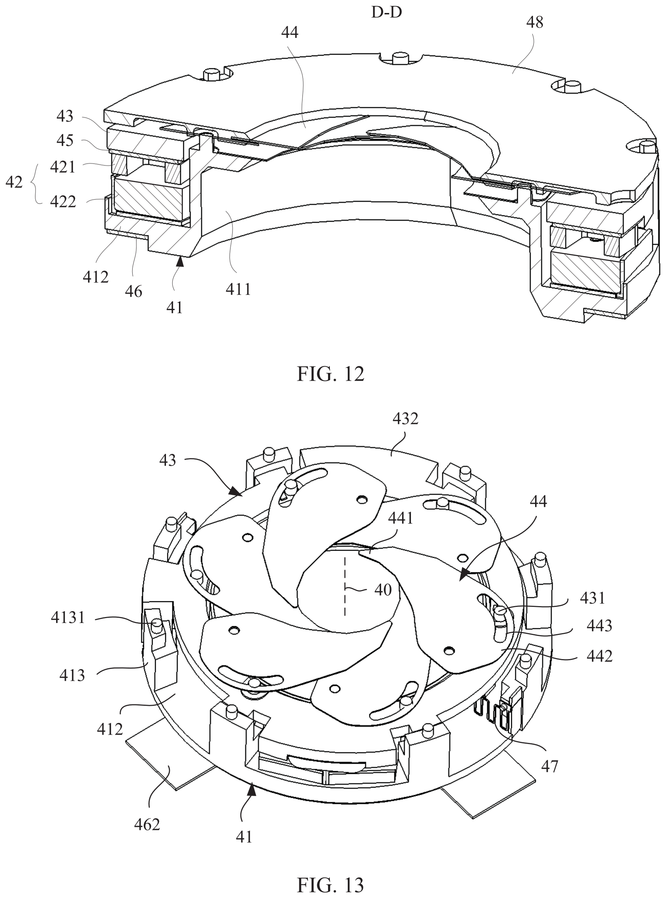

FIG. 10 is a diagram of a structure of a variable aperture 4 of the camera module 300 in FIG. 6. FIG. 11 is an exploded view of the variable aperture 4 in FIG. 10. FIG. 12 is a D-D sectional view of the variable aperture 4 in FIG. 10. FIG. 13 is a diagram of a structure of the variable aperture 4 in FIG. 10 after a top panel 48 is removed. As shown in FIG. 10 to FIG. 13, the variable aperture 4 includes an aperture base 41, an aperture driver 42, an aperture rotor 43 disposed on the aperture base 41, and a blade 44 disposed on the aperture rotor 43. The aperture driver 42 is configured to drive the variable aperture 4 to change a light flux. Specifically, the aperture driver 42 is configured to drive the aperture rotor 43 to rotate relative to the aperture base 41, and the blade 44 is movable along with the aperture rotor 43 to change the light flux.

As shown in FIG. 11 and FIG. 12, the aperture base 41 includes a light transmission barrel 411 and a bearing flange 412 disposed at an edge of a first end of the light transmission barrel 411. The bearing flange 412 extends in a radial direction of the light transmission barrel 411, and a barrel hole of the light transmission barrel 411 is a light transmission hole of the variable aperture 4.

The aperture rotor 43 is in a ring shape, the aperture rotor 43 is rotatably sleeved at a second end of the light transmission barrel 411, and the aperture driver 42 is disposed between the bearing flange 412 and the aperture rotor 43. The aperture driver 42 includes an aperture driving coil 421 disposed on the aperture rotor 43 and a first magnetic body 422 disposed on the bearing flange 412, and the aperture driving coil 421 is disposed opposite to the first magnetic body 422.

As shown in FIG. 13, the blades 44 are located at an end face of the second end of the light transmission barrel 411, the blades 44 are connected to the aperture rotor 43 through a connection structure, the blades 44 have swing terminals 441 and connection terminals 442, the swing terminals 441 of the blades 44 are disposed close to an axis 40 of the light transmission barrel 411, and the connection terminals 442 of the blades 44 are disposed away from the axis 40 of the light transmission barrel 411.

The connection structure includes arc-shaped grooves 443 disposed at connection terminals 442 of the blades 44 and slide columns 431 disposed on the aperture rotor 43. One end of an arc-shaped groove 443 is disposed close to the axis 40 of the light transmission barrel 411, and the other end of the arc-shaped groove 443 is disposed away from the axis 40 of the light transmission barrel 411. The slide columns 431 are in sliding cooperation with the arc-shaped grooves 443.

When the variable aperture 4 adjusts the light flux of the optical lens 400, the aperture driving coil 421 is powered on, and a magnetic field of the first magnetic body 422 interacts with the aperture driving coil 421, so that the aperture rotor 43 rotates relative to the light transmission barrel 411. The aperture rotor 43 drives the slide columns 431 to slide along the arc-shaped grooves 443, and the blades 44 swing under the action of the slide columns 431, so that the swing terminals 441 of the blades 44 are away from or close to the axis 40 of the light transmission barrel 411, so as to adjust a size of the light transmission hole of the variable aperture 4 to change the light flux of the variable aperture 4.

As shown in FIG. 13, there are a plurality of blades 44, for example, six blades 44, and the plurality of blades 44 are arranged in a circumferential direction of the aperture rotor 43.

Certainly, in the aperture driver 42, positions of the aperture driving coil 421 and the first magnetic body 422 may alternatively be exchanged. That is, the aperture driving coil 421 is disposed on the bearing flange 412, and the first magnetic body 422 is disposed on the aperture rotor 43. In the connection structure, positions of the slide columns 431 and the arc-shaped grooves 443 may alternatively be exchanged. That is, the arc-shaped grooves 443 are disposed on the aperture rotor 43, and the slide columns 431 are disposed on the blades 44.

In some embodiments, as shown in FIG. 11 and FIG. 13, a plurality of locking protrusions 413 (for example, eight locking protrusions 413 shown in FIG. 13) are disposed on the bearing flange 412, the plurality of locking protrusions 413 are arranged in a circumferential direction of the light transmission barrel 411, and locking space is formed between two adjacent locking protrusions 413. A rotor flange 432 is disposed at an edge of the aperture rotor 43. The rotor flange 432 extends into the locking space. In this way, the locking protrusions 413 may limit a rotation angle range of the aperture rotor 43, to accurately control a swing amplitude of the blade 44 to meet adjustment of the size of the light transmission hole.

In some embodiments, as shown in FIG. 11, FIG. 12, and FIG. 14, FIG. 14 is an E-E sectional view of the variable aperture 4 in FIG. 10. The variable aperture 4 includes a first aperture circuit board 45 and a second aperture circuit board 46. The first aperture circuit board 45 is in a ring shape, and is disposed on a surface (a lower surface of the aperture rotor 43 in FIG. 12) of a side of the aperture rotor 43 close to the bearing flange 412. The aperture driving coil 421 is disposed on the first aperture circuit board 45. The second aperture circuit board 46 is annular and is disposed on a surface (a lower surface of the bearing flange 412 in FIG. 12) on a side of the bearing flange 412 away from the aperture rotor 43. A first connection lug 461 and a second connection lug 462 are disposed at an edge of the second aperture circuit board 46, the first connection lug 461 extends to an edge of the first aperture circuit board 45, and the first connection lug 461 is electrically connected to the first aperture circuit board 45 through an aperture elastic part 47. The second connection lug 462 is an external terminal of the variable aperture 4.

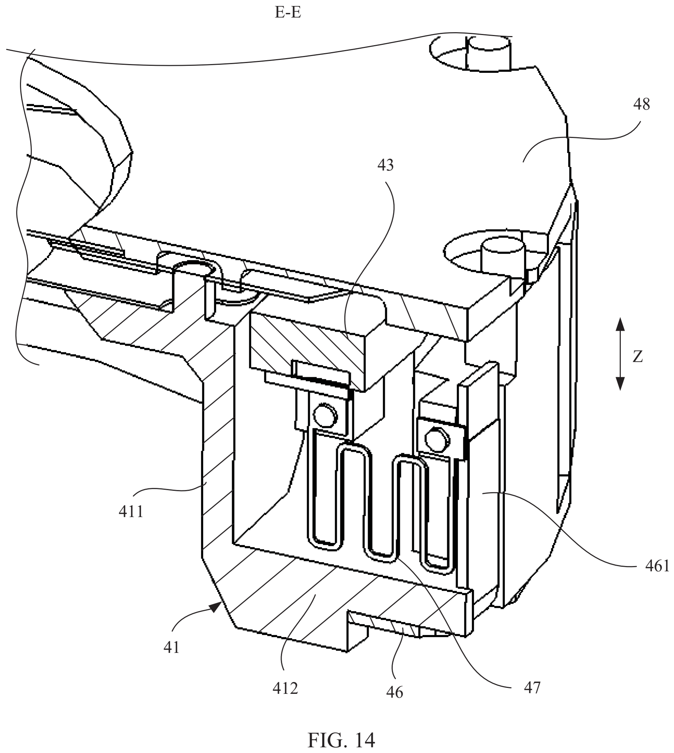

In some embodiments, as shown in FIG. 14, the aperture elastic part 47 is disposed in locking space between two adjacent locking protrusions 413. The aperture elastic part 47 is tortuous cabling, and a plane in which the tortuous cabling is located is parallel to the axial direction Z of the variable aperture 4. In other words, the aperture elastic part 47 is vertically placed relative to the bearing flange 412. Compared with placing the aperture elastic part 47 horizontally relative to the bearing flange 412, placing the aperture elastic part 47 vertically relative to the bearing flange 412 can reduce space occupied by the aperture elastic part 47.

A plane in which the tortuous cabling is located is parallel to the axial direction Z of the variable aperture 4, and may be absolutely parallel, or may be approximately parallel (for example, with a deviation being 5 degrees). This is not specifically limited herein.

In some embodiments, as shown in FIG. 11, FIG. 12, and FIG. 13, the variable aperture 4 further includes a top panel 48. The top panel 48 is in a ring shape. An edge of the top panel 48 is disposed on the locking protrusions 413. The blades 44 are located between the top panel 48 and the aperture rotor 43. In this way, the top panel 48 may limit the blades 44, to prevent the blades 44 from being separated from the aperture rotor 43; and in addition, the top panel 48 may also protect the blades 44, to avoid damage to the blades 44.

In some embodiments, top panel grooves 481 are disposed at an edge of the top panel 48, limiting posts 4131 are disposed on the locking protrusions 413, and the limiting posts 4131 are disposed in the top panel grooves 481. In this way, the limiting posts 4131 may play a rotation limiting function on the top panel 48, to prevent the top panel 48 from rotating relative to the aperture base 41.

In some embodiments, as shown in FIG. 7, the variable aperture 4 is disposed on the optical lens 400. However, this is not limited thereto. The variable aperture 4 may alternatively be disposed on the lens carrier 3.

In some embodiments, as shown in FIG. 7 and FIG. 8, a lens mounting hole 31 is disposed on the lens carrier 3, the optical lens 400 is disposed in the lens mounting hole 31, and the optical lens 400 is clamped to the lens carrier 3. As shown in FIG. 7 and FIG. 8, a clamping protrusion 32 is disposed on a hole wall of the lens mounting hole 31, a clamping slot 430 is provided on an outer wall of the lens barrel of the optical lens 400, and the clamping protrusion 32 extends into the clamping slot 430, so that the optical lens 400 is clamped to the lens carrier 3.

Positions of the clamping protrusion 32 and the clamping slot 430 may also be exchanged. That is, the clamping protrusion 32 is disposed on the outer wall of the lens barrel 410, and the clamping slot 430 is provided on the hole wall of the lens mounting hole 31. In addition to being clamped, the optical lens 400 may alternatively be mounted to the lens carrier 3 through a threaded connection.

In some embodiments, as shown in FIG. 8 and FIG. 9, the lens carrier 3 includes a fastening barrel 33 and a pressing portion 34 protruding from an outer wall of the fastening barrel 33. A lens carrier mounting hole 21 is provided on the moving base 2, the lens carrier 3 is disposed in the lens carrier mounting hole 21, a lens carrier limiting portion 22 is disposed on a hole wall of the lens carrier mounting hole 21, and the lens carrier limiting portion 22 presses against the pressing portion 34, to limit motion of the lens carrier 3 in the axial direction Z of the variable aperture 4.

The pressing portion 34 may be of a panel structure, or may be of a block structure. This is not specifically limited herein. The lens carrier limiting portion 22 may be of a panel structure, or may be of a block structure. This is not specifically limited herein.

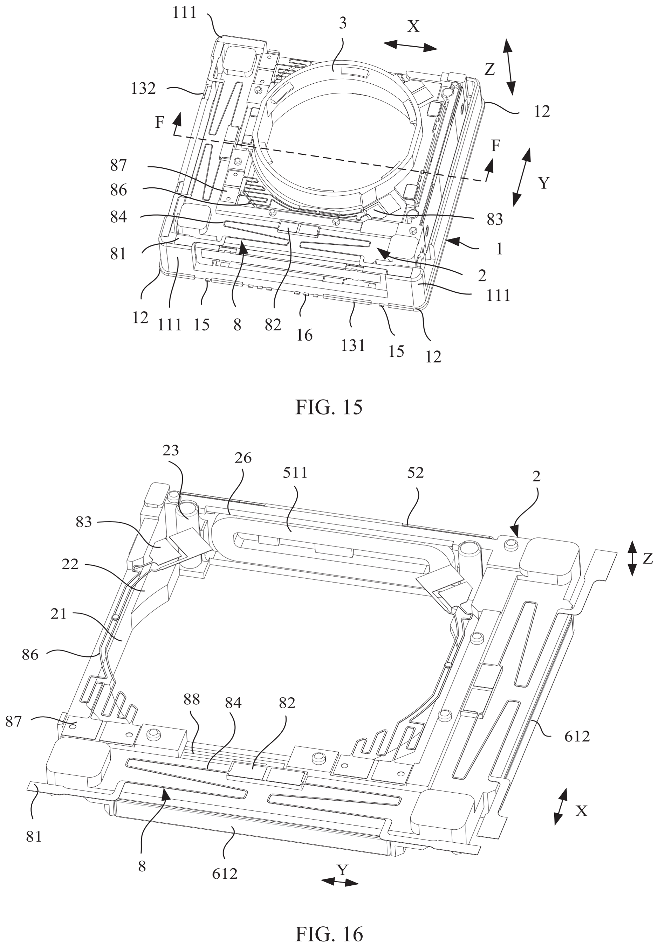

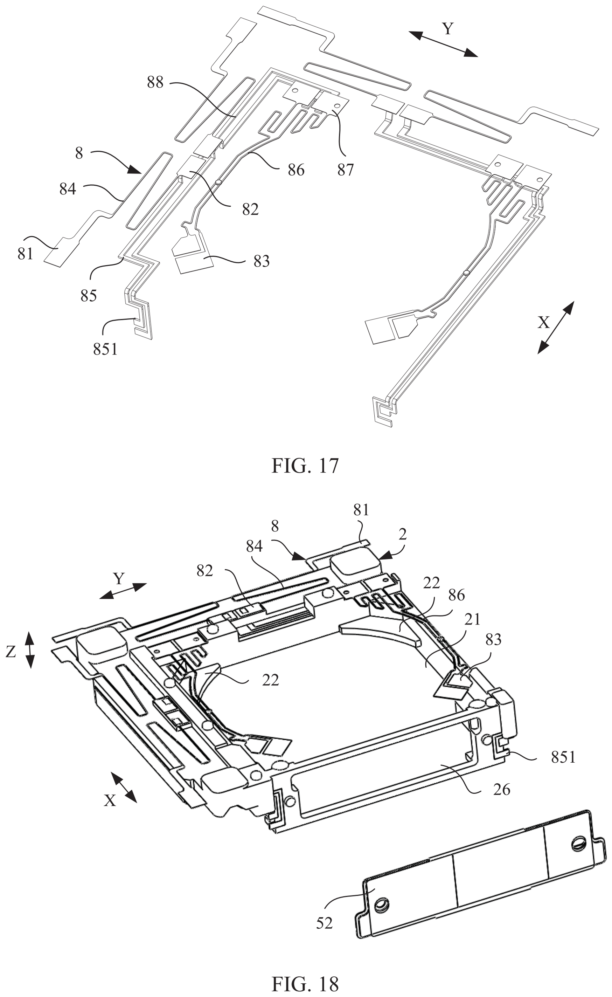

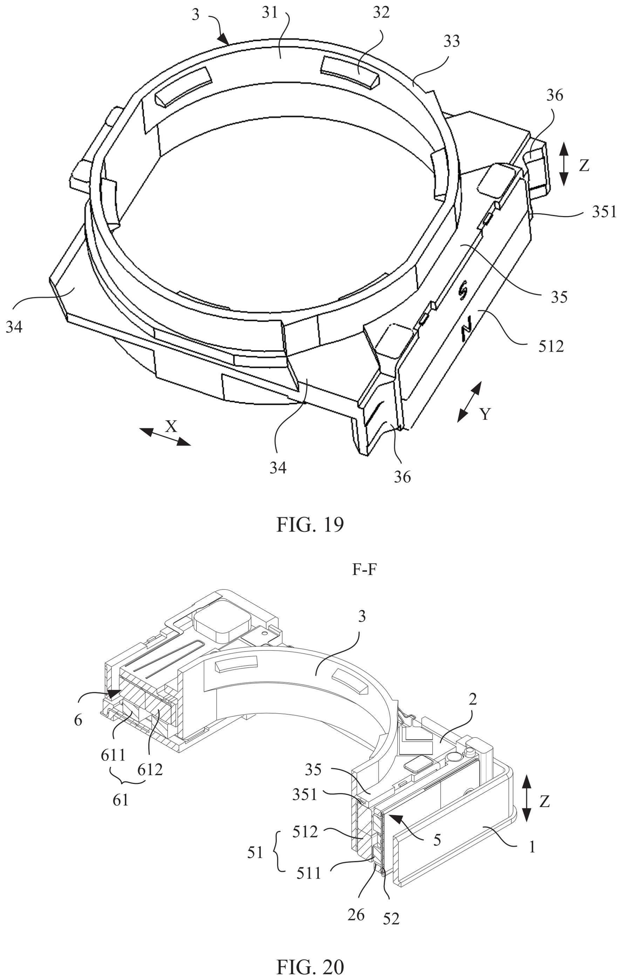

FIG. 15 is a diagram of a structure of the camera module 300 in FIG. 6 after a variable aperture 4, a module circuit board 600, and an optical lens 400 are removed. FIG. 16 is a diagram of a moving base 2 of the camera module 300 in FIG. 15 in a view angle. FIG. 17 is a diagram of a connection line 8 on the moving base 2 in FIG. 16. FIG. 18 is a diagram of a moving base 2 of the camera module 300 in FIG. 15 in another view angle. FIG. 19 is a diagram of a structure of a lens carrier 3 of the camera module 300 in FIG. 15. FIG. 20 is an F-F sectional view of FIG. 15.

In some embodiments, as shown in FIG. 16, FIG. 19, and FIG. 20, the focus driving device 5 includes a focus driver 51. The focus driver 51 includes a focus driving coil 511 disposed on the moving base 2 and a second magnetic body 512 disposed on the lens carrier 3.

During focusing, the focus driving coil 511 is powered on, and a magnetic field of the second magnetic body 512 interacts with the focus driving coil 511, so that the lens carrier 3 moves in the axial direction Z of the variable aperture 4, thereby driving the optical lens 400 to move in the axial direction Z, to implement focusing of the camera module 300.

Certainly, arrangement positions of the focus driving coil 511 and the second magnetic body 512 may alternatively be exchanged. That is, the focus driving coil 511 is disposed on the lens carrier 3, and the second magnetic body 512 is disposed on the moving base 2.

In some embodiments, as shown in FIG. 19, a magnet fastening portion 35 is further disposed on an outer wall of the fastening barrel 33, a second magnet placement slot 351 is provided on the magnet fastening portion 35, and the second magnetic body 512 is disposed in the second magnet placement slot 351. As shown in FIG. 16 and FIG. 20, the focus driving coil 511 is disposed in the lens carrier mounting hole 21, and is disposed opposite to the second magnetic body 512.

To make the lens carrier 3 move more smoothly, in some embodiments, as shown in FIG. 16, FIG. 18, and FIG. 19, a first slide shaft 23 is disposed in the lens carrier mounting hole 21, the first slide shaft 23 extends in the axial direction Z of the variable aperture 4, a recessed portion 36 is disposed on the lens carrier 3, and the recessed portion 36 is in sliding cooperation with the first slide shaft 23. In this way, the first slide shaft 23 may guide the lens carrier 3, so that the lens carrier 3 moves more smoothly.

The recessed portion 36 may be included angle space formed by two surfaces, for example, a V groove. One or more recessed portions 36 may be disposed (as shown in FIG. 18). This is not specifically limited herein.

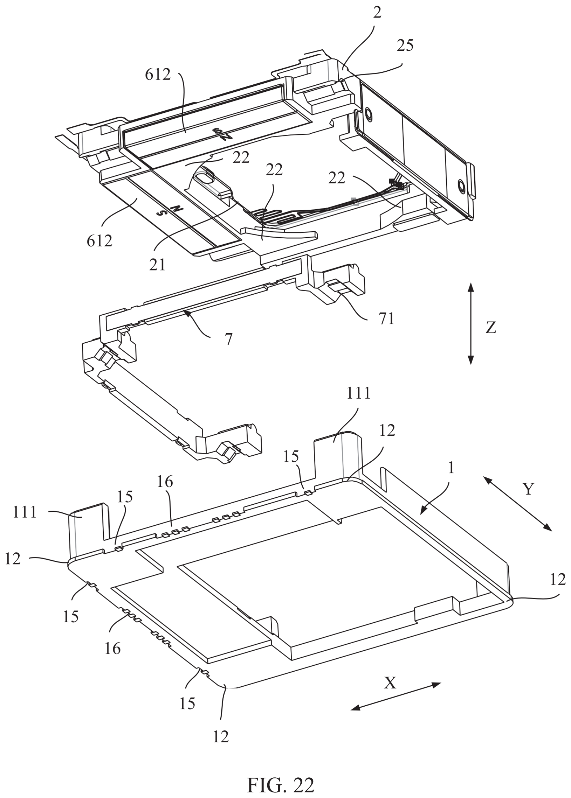

In some embodiments, as shown in FIG. 15, FIG. 21, and FIG. 22, FIG. 21 is an exploded view of the moving base 2 and a base 1 of the camera module 300 in FIG. 15 in a view angle, and FIG. 22 is an exploded view of the moving base 2 and a base 1 of the camera module 300 in FIG. 15 in another view angle. There is a moving base limiting portion 11 at an edge of the base 1, and the moving base limiting portion 11 is located on an outer side of the moving base 2. The moving base limiting portion 11 is configured to limit motion of the moving base 2 in the direction perpendicular to the axial direction Z.

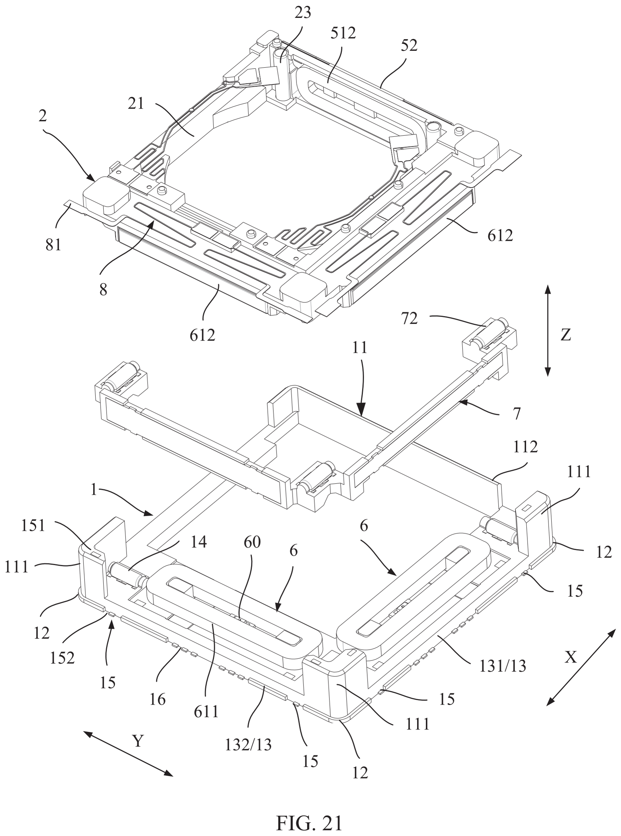

As shown in FIG. 21, the moving base limiting portion 11 includes a limiting table 111 and a limiting rib 112. The limiting table 111 is disposed at a corner portion 12 of the base 1, the limiting rib 112 is disposed on a side edge 13 of the base 1, and the limiting table 111 and the limiting rib 112 are arranged in a circumferential direction of the base 1. Certainly, a structure of the moving base limiting portion 11 is not limited thereto, and may alternatively be set to another structure according to an actual condition.

In some embodiments, as shown in FIG. 20, FIG. 21, and FIG. 22, the image stabilization driving device 6 includes an image stabilization driver 61, and the image stabilization driver 61 includes an image stabilization driving coil 611 disposed on the base 1 and a third magnetic body 612 disposed on the moving base 2.

During image stabilization, the image stabilization driving coil 611 is powered on, and a magnetic field of the third magnetic body 612 interacts with the image stabilization driving coil 611, so that the moving base 2 moves in the direction perpendicular to the axial direction Z, thereby driving the lens carrier 3 and the optical lens 400 to move in the direction perpendicular to the axial direction Z, to implement image stabilization of the camera module 300.

Certainly, arrangement positions of the image stabilization driving coil 611 and the third magnetic body 612 may alternatively be exchanged. That is, the image stabilization driving coil 611 is disposed on the moving base 2, and the third magnetic body 612 is disposed on the base 1.

In some embodiments, as shown in FIG. 20, FIG. 21, and FIG. 22, the side edge 13 of the base 1 includes a first side edge 131 and a second side edge 132 that are adjacently disposed; image stabilization driving devices 6 are respectively disposed on the first side edge 131 and the second side edge 132, the image stabilization driving device 6 on the first side edge 131 is configured to drive the moving base 2 to move relative to the base 1 in a first direction X, the image stabilization driving device 6 on the second side edge 132 is configured to drive the moving base 2 to move relative to the base 1 in a second direction Y, and the first direction X, the second direction Y, and the axial direction Z are mutually perpendicular. In this way, the camera module 300 can implement image stabilization in the first direction X and the second direction Y.

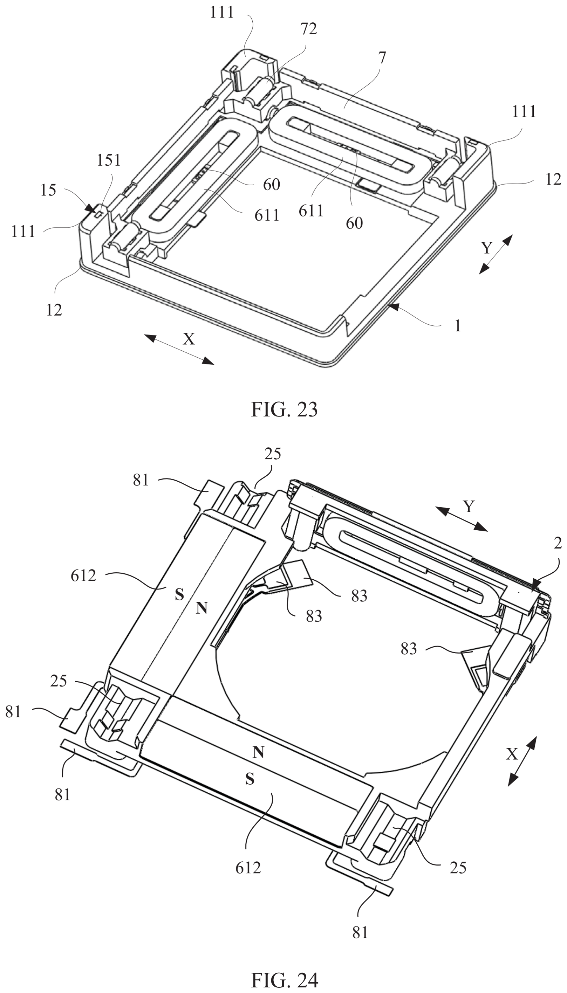

In some embodiments, as shown in FIG. 21, FIG. 23, and FIG. 24, FIG. 23 is a diagram of mounting the base 1 and a slide base 7 in FIG. 21 together, and FIG. 24 is a diagram of a structure of a bottom of the moving base 2 of the camera module 300 in FIG. 21. A second slide shaft 14 and a slide base 7 are disposed on the base 1, the second slide shaft 14 extends in the second direction Y, a first slide slot 71 is provided on the slide base 7, and the first slide slot 71 is in sliding cooperation with the second slide shaft 14, so that the slide base 7 is slidably connected to the base 1 in the second direction Y.

As shown in FIG. 21 and FIG. 22, a third slide shaft 72 is further disposed on the slide base 7, the third slide shaft 72 extends in the first direction X, a second slide slot 25 is provided on the moving base 2, and the second slide slot 25 is in sliding cooperation with the third slide shaft 72, so that the moving base 2 is slidably connected to the slide base 7 in the first direction X.

When the camera module 300 needs image stabilization in the second direction Y, the image stabilization driving device 6 on the second side edge 132 drives the slide base 7 to move in the second direction Y relative to the base 1, the slide base 7 drives the moving base 2 to move in the second direction Y relative to the base 1, and the moving base 2 drives the lens carrier 3 and the optical lens 400 to move in the second direction Y relative to the base 1, to implement image stabilization of the camera module 300 in the second direction Y.

When the camera module 300 needs image stabilization in the first direction X, the image stabilization driving device 6 on the first side edge 131 drives the moving base 2 to move in the first direction X relative to the slide base 7, and the moving base 2 drives the lens carrier 3 and the optical lens 400 to move in the first direction X relative to the slide base 7, to implement stabilization of the camera module 300 in the first direction X.

The second slide shaft 14 is disposed, so that the second slide shaft 14 can guide the slide base 7, and the slide base 7 drives the moving base 2 to move more smoothly in the second direction Y. The third slide shaft 72 is disposed, so that the third slide shaft 72 can guide the moving base 2, and the moving base 2 moves more smoothly in the first direction X.

One or more second slide shafts 14 may be disposed (three second slide shafts are shown in FIG. 21). This is not specifically limited herein. One or more first slide slots 71 may be set, and a quantity of first slide slots 71 specifically corresponds to a quantity of second slide slots 25. One or more third slide shafts 72 may be disposed (three second slide shafts are shown in FIG. 21). This is not specifically limited herein. One or more second slide slots 25 may be set, and a quantity of second slide slots 25 specifically corresponds to the quantity of second slide slots 25.

In some embodiments, as shown in FIG. 21, the slide base 7 is in an "L" shape, a part of the slide base 7 is located on the first side edge 131 of the base 1, and the other part of the slide base 7 is located on the second side edge 132 of the base 1. The slide base 7 is set to be in an "L" shape, so that space occupied by the slide base 7 on the base 1 can be reduced. Certainly, the slide base 7 is not limited to being set to be in an "L" shape, and may alternatively be set to be in another shape according to an actual condition.

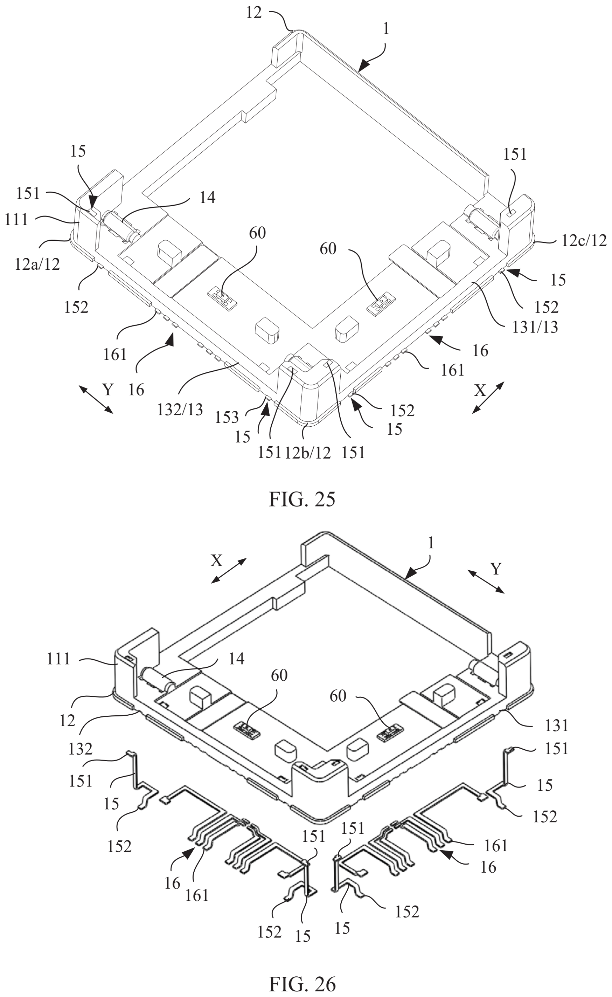

In some embodiments, as shown in FIG. 25 and FIG. 26, FIG. 25 is a diagram of a structure of the base 1 shown in FIG. 23 after an image stabilization driving coil 611 and the slide base 7 are removed, and FIG. 26 is an exploded view of the base 1 in FIG. 25 and pins disposed on the base 1. The base 1 has a plurality of corner portions 12 in a circumferential direction, the plurality of corner portions 12 are provided with first pins 15, the first pins 15 have a first connection terminal 151 and a second connection terminal 152, and the second connection terminal 152 is an external terminal and is electrically connected to the module circuit board 600. As shown in FIG. 6 and FIG. 21, the first connection terminal 151 is electrically connected to the variable aperture 4 and the focus driving device 5 through a connection line 8.

As shown in FIG. 25 and FIG. 26, a contour of the base 1 is rectangular, the base 1 has four corner portions 12 in a circumferential direction, first pins 15 are disposed at three corner portions 12, the three corner portions 12 are respectively a corner portion 12a, a corner portion 12b, and a corner portion 12c, one first pin 15 is disposed at each of the corner portion 12a, the corner portion 12b, and the corner portion 12c, and two first pins 15 are disposed at the corner portion 12b. Certainly, the contour of the base 1 is not limited to a rectangle, and may alternatively be set to another polygon, for example, a hexagon or a pentagon. In addition to the first pins 15 disposed at the three corner portions 12 of the base 1, the first pins 15 may also be disposed at four or two corner portions 12 of the base 1, which may be specifically determined according to an actual condition.

The first connection terminals 151 of the first pins 15 are electrically connected to the variable aperture 4 and the focus driving device 5. That is, the variable aperture 4 and the focus driving device 5 share the first pins 15. In this way, a quantity of pins of the lens driving apparatus 700 may be reduced, thereby simplifying circuit design of the lens driving apparatus 700. A plurality of first pins 15 are arranged at the plurality of corner portions 12 of the base 1. In this way, the first pins 15 can be easily electrically connected to the connection line 8, and there is no need to arrange a conductive member and an intermediate connection line 8 between the first pins 15 and the connection line 8, thereby simplifying circuit design of the lens driving apparatus 700, simplifying circuit design of an entire camera module 300, and improving working reliability of a circuit of the camera module 300.

In some embodiments, as shown in FIG. 21, FIG. 25, and FIG. 26, the first pins 15 are embedded in the base 1, the first connection terminals 151 are exposed from a surface of the base 1 and are connected to the connection line 8, and the second connection terminals 152 extend out of the base 1. The first pins 15 are embedded in the base 1, so that the first pins 15 can be prevented from occupying extra space outside the base 1, and a structure of the lens driving apparatus 700 is more compact. In addition, the base 1 can further protect an embedded part of the first pins 15, thereby reducing corrosion damage to the first pins 15 from the outside.

In some embodiments, as shown in FIG. 25, a part of the first pins 15 are embedded in the limiting table 111, and the first connection terminals 151 are exposed from an end face of the limiting table 111. In this way, the first connection terminals 151 may be closer to the moving base 2, and a path of the connection line 8 is shortened, so that the first connection terminals 151 are more conveniently connected to the connection line 8. Certainly, the first connection terminals 151 are not limited to being located on the limiting table 111, and may alternatively be disposed at another position of the base 1.

In some embodiments, as shown in FIG. 15 to FIG. 18, FIG. 17 is a diagram of a connection line 8 on the moving base 2 in FIG. 16. The connection line 8 includes a connection contact 81, a first terminal 82, and a second terminal 83. The connection contact 81 is connected to a first connection terminal 151, the first terminal 82 is disposed on the moving base 2, and the first terminal 82 is electrically connected to the connection contact 81 through a first elastic wire 84. The first terminal 82 is electrically connected to the focus driving device 5 through the focus wire 85, the second terminal 83 is disposed on the lens carrier 3 and is electrically connected to the variable aperture 4, and the second terminal 83 is electrically connected to the first terminal 82 through a second elastic wire 86. As shown in FIG. 6 and FIG. 10, the second terminal 83 is electrically connected to an external terminal (for example, a second connection lug 462 of the variable aperture 4) of the variable aperture 4.

The first elastic wire 84 is disposed between the first terminal 82 and the connection contact 81. In this way, the first elastic wire 84 has an electrical connection function, and the first elastic wire 84 also elastically deforms when the moving base 2 moves in the direction perpendicular to the axial direction Z, to provide a reset force for the moving base 2. The second elastic wire 86 is disposed between the second terminal 83 and the first terminal 82. In this way, the second elastic wire 86 has an electrical connection function, and the second elastic wire 86 also elastically deforms when the lens carrier 3 moves in the axial direction Z, to provide a reset force for the lens carrier 3.

Each first pin 15 is electrically connected to the focus driving device 5 and the variable aperture 4 through the connection line 8. For example, as shown in FIG. 15 to FIG. 18, the four first pins 15 are electrically connected to the focus driving device 5 and the variable aperture 4 through connection lines 8. In two connection lines 8, the first terminal 82 is disposed on a side of the moving base 2 close to the first side edge 131, and the first elastic wire 84 may be elastically deformed in the second direction Y, to provide a reset force for the moving base 2 in the second direction Y. In the other two connection lines 8, the first terminal 82 is disposed on a side of the moving base 2 close to the second side edge 132, and the first elastic wire 84 may be elastically deformed in the first direction X, to provide a reset force for the moving base 2 in the first direction X.

As shown in FIG. 15 and FIG. 16, the connection contact 81 is welded to the first connection terminal 151, but this is not limited thereto. In addition to welding, the connection contact 81 may alternatively be connected to the first connection terminal 151 through a fastener (for example, a screw). As shown in FIG. 15 and FIG. 16, the connection contact 81 is of a sheet structure, but this is not limited thereto. In addition to the sheet structure, the connection contact 81 may be of a block structure, a columnar structure, or the like.

In some embodiments, as shown in FIG. 15, FIG. 16, and FIG. 17, the connection line 8 further includes a conversion terminal 87 and a conversion wire 88, where the conversion terminal 87 is disposed on the moving base 2, the conversion wire 88 is connected between the first terminal 82 and the conversion terminal 87, and the second elastic wire 86 is connected between the conversion terminal 87 and the second terminal 83. The conversion wire 88 and the conversion terminal 87 are disposed. In this way, the conversion terminal 87 may be disposed at an end position of the second elastic wire 86, and the first terminal 82 may be disposed at another position on the moving base 2, thereby facilitating arrangement of the first terminal 82 on the moving base 2, and facilitating arrangement of the first elastic wire 84 between the first terminal 82 and the connection contact 81.

In some embodiments, as shown in FIG. 16 and FIG. 17, the conversion wire 88 is at least partially embedded in the moving base 2. The conversion wire 88 may be completely embedded in the moving base 2, or may be partially embedded into the moving base 2. This is not specifically limited herein. At least a part of the conversion wire 88 is embedded in the moving base 2, so that space, occupied by the conversion wire 88, outside the moving base 2 may be reduced, and the moving base 2 may also protect an embedded part of the conversion wire 88, thereby reducing corrosion damage to the conversion wire 88 from the outside.

In some embodiments, as shown in FIG. 16, FIG. 17, and FIG. 18, the focus driving device 5 includes a first control unit 52. The first control unit 52 is electrically connected to the focus driver 51, the focus wire 85 is electrically connected to the first control unit 52, and the first control unit 52 is disposed on a side wall of the moving base 2. The first control unit 52 is disposed on the side wall of the moving base 2, so that space occupied by the first control unit 52 on the moving base 2 in the direction perpendicular to the axial direction Z can be reduced, thereby reducing extrusion of the first control unit 52 on arrangement space of the lens carrier 3, and facilitating optimized arrangement of the lens carrier 3.

In some embodiments, as shown in FIG. 16 and FIG. 18, the first control unit 52 is a drive chip, a coil avoidance opening 26 is disposed on the side wall of the moving base 2, the focus driving coil 511 of the focus driver 51 is disposed on the first control unit 52, and the focus driving coil 511 extends into the lens carrier mounting hole 21 through the coil avoidance opening 26. The focus driving coil 511 is disposed on the first control unit 52, so that space occupied by the focus driving coil 511 and the first control unit 52 on the moving base 2 can be reduced, and the moving base 2 is more compact.

In some embodiments, as shown in FIG. 16, FIG. 17, and FIG. 18, the focus wire 85 is embedded in the moving base 2, the focus wire 85 is provided with a control unit connection terminal 851, and the control unit connection terminal 851 is exposed from the side wall of the moving base 2 and is electrically connected to the first control unit 52. The focus wire 85 is embedded in the moving base 2, so that space, occupied by the focus wire 85, outside the moving base 2 may be reduced, and the moving base 2 may also protect an embedded part of the focus wire 85, thereby reducing corrosion damage to the focus wire 85 from the outside.

As shown in FIG. 16, FIG. 17, and FIG. 18, a quantity of control unit connection terminals 851, a quantity of first terminals 82, a quantity of second terminals 83, and a quantity of conversion terminals 87 are all four, but are not limited to four, or may be more than four, which are specifically corresponding to a quantity of first pins 15.

In some embodiments, as shown in FIG. 21, FIG. 22, and FIG. 26, a side edge 13 of the base 1 is provided with a second pin 16, the second pin 16 is electrically connected to the image stabilization driving device 6, the side edge 13 is further provided with first pins 15, and the first pins 15 are separately disposed at corner portions 12 on two sides of the second pin 16. The first pin 15 is distributed on two sides of the second pin 16 and is located on a same side edge 13, so that the first pins 15 and the second pin 16 are arranged in a relatively compact manner, and the first pins 15 and the second pin 16 are electrically connected to a module circuit board 600.

In some embodiments, as shown in FIG. 21, FIG. 22, and FIG. 26, the first side edge 131 and the second side edge 132 are respectively provided with second pins 16, the second pin 16 and the image stabilization driving device 6 that are located on the first side edge 131 are electrically connected, and the second pin 16 and the image stabilization driving device 6 that are located on the second side edge 132 are electrically connected. The second pin 16 and the image stabilization driving device 6 that are located on the same side edge 13 of the base 1 are electrically connected, so that an electrical connection path between the second pin 16 and the image stabilization driving device 6 can be shortened, and a relatively long wire does not need to be arranged between the second pin 16 and the image stabilization driving device 6, thereby simplifying circuit design of the lens driving apparatus 700.

As shown in FIG. 25 and FIG. 26, the first side edge 131 and the second side edge 132 are respectively provided with first pins 15. On the first side edge 131, the first pins 15 are separately disposed at corner portions 12 on two sides of the second pin 16, that is, at a corner portion 12c and a corner portion 12b. On the second side edge 132, the first pins 15 are separately disposed at corner portions 12 on two sides of the second pin 16, that is, at the corner portion 12b and a corner portion 12a. In this way, the first pins 15 and the second pins 16 may be disposed on the first side edge 131 and the second side edge 132 of the base 1 in a centralized manner, so that the first pins 15 and the second pins 16 are electrically connected to the module circuit board 600.

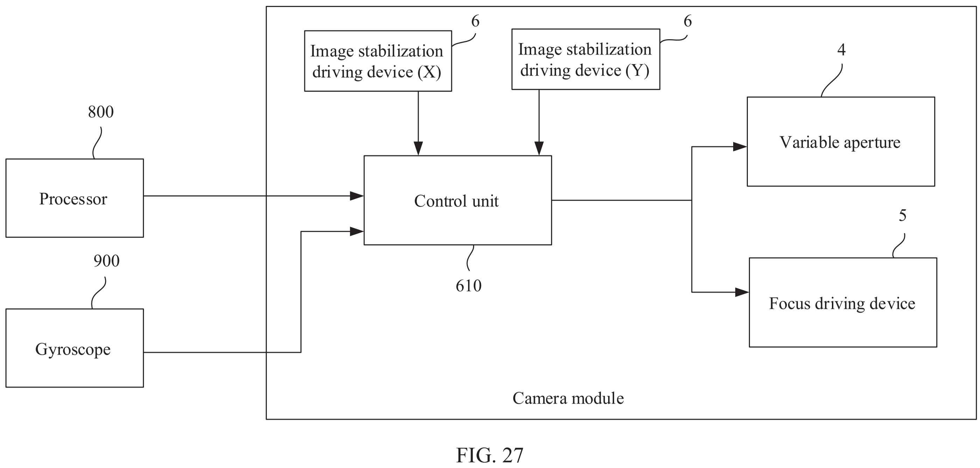

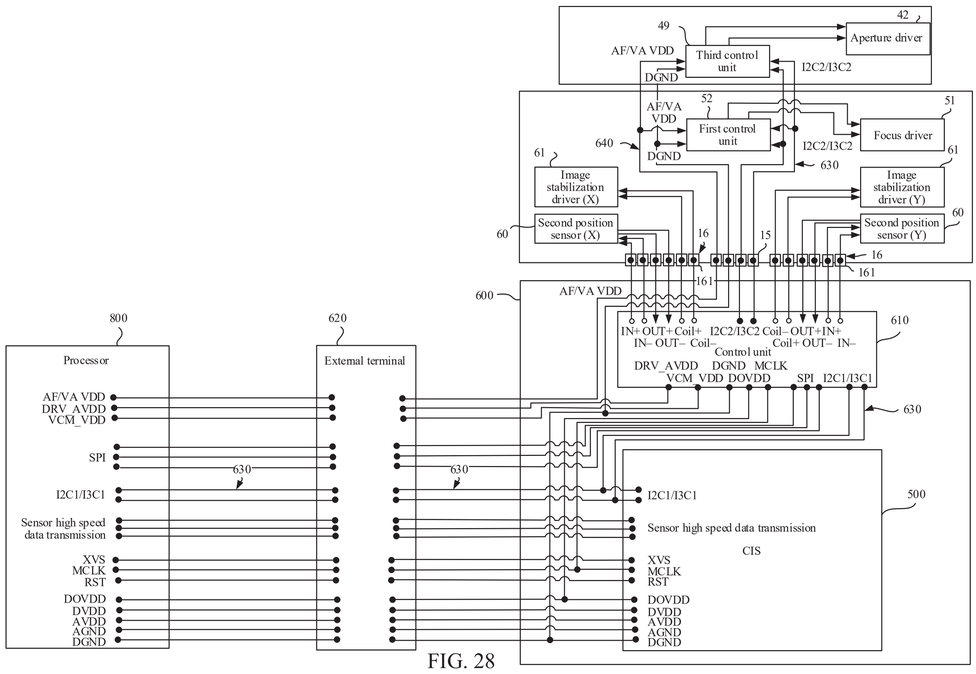

FIG. 27 is an architectural diagram of a connection between a camera module 300 according to a first embodiment of this application and a processor 800 of an electronic device. FIG. 28 is a schematic of a circuit connection between a camera module 300 according to a first embodiment of this application and a processor 800 of an electronic device. As shown in FIG. 27 and FIG. 28, in this embodiment, the electronic device includes a processor 800, a control unit 610 and an external terminal 620 are disposed on the module circuit board 600, and the control unit 610 is separately electrically connected to the external terminal 620, the variable aperture 4 of the lens driving apparatus 700, and the focus driving device 5, and the external terminal 620 is electrically connected to the processor 800. The external terminal 620 may be a connector.

As shown in FIG. 27, the electronic device further includes a gyroscope 900. The gyroscope 900 may obtain posture information of the electronic device, and the posture information includes an angle of the electronic device. The processor 800 and the gyroscope 900 may be integrated together to form an SOC (System on Chip, system on chip). The SOC is disposed on a mainboard of the electronic device.

As shown in FIG. 28, the focus driving device 5 includes the first control unit 52 and the focus driver 51 electrically connected to the first control unit 52. The focus driver 51 is configured to drive the lens carrier 3 to move relative to the moving base 2 in the axial direction Z of the variable aperture 4. The first control unit 52 is configured to send a drive signal to the focus driver 51, so that the focus driver 51 works.

The variable aperture 4 includes a third control unit 49 and an aperture driver 42 electrically connected to the third control unit 49. The aperture driver 42 is configured to drive the aperture rotor 43 to rotate relative to the aperture base 41. The third control unit 49 is configured to send a drive signal to the aperture driver 42 based on a target F-number to be achieved through adjustment, so that the aperture driver 42 works. Both the first control unit 52 and the second control unit 62 are electrically connected to the control unit 610.

The control unit 610 is configured such that: during focusing, the control unit 610 calculates a required movement amount of the lens carrier 3 based on position data of the lens carrier 3, and then sends a movement instruction of the lens carrier 3 to the first control unit 52, so that the first control unit 52 controls the focus driver 51 to work.

The control unit 610 is configured such that the control unit 610 may perform autofocus control algorithm processing and calculation. That is, the control unit 610 is a calculation module of the focus driving device 5. In this way, the first control unit 52 only needs to perform work, for example, sending a drive signal to the focus driver 51, which may simplify work of the first control unit 52, thereby improving working efficiency of the focus driving device 5.

In addition to the calculation module of the focus driving device 5, the control unit 610 may alternatively be a calculation module of the variable aperture 4, to perform control algorithm processing and calculation for adjusting an F-number of the variable aperture 4. Specifically, the control unit 610 is configured such that: during adjustment of the F-number of the variable aperture 4, the control unit 610 calculates a required rotation amount of the aperture rotor 43 based on position data of the aperture rotor 43, and then sends a movement instruction of the aperture rotor 43 to the third control unit 49, so that the third control unit 49 controls the aperture driver 42 to work. In this way, the third control unit 49 only needs to perform work, for example, sending a drive signal to the aperture driver 42, so that work of the third control unit 49 can be simplified, and working efficiency of adjusting the F-number of the variable aperture 4 can be improved.

In addition, the control unit 610 may also be both the calculation module of the focus driving device 5 and the calculation module of the variable aperture 4, to perform focus control algorithm processing and calculation, and perform control algorithm processing and calculation for F-number adjustment of the variable aperture 4.

In some embodiments, as shown in FIG. 28, a part of the first pins 15 are control signal pins, and the other part of the first pins 15 are power pins. The control signal pins are electrically connected to the first control unit 52 and the third control unit 49 through a first control line 630, and the control signal pins are further electrically connected to the control unit 610 through the first control line 630. The power pins are electrically connected to the external terminal 620, the first control unit 52, and the third control unit 49 through a first power line 640. For example, as shown in FIG. 28, the first control line 630 may be an I2C/I3C line, and the first power line 640 includes an AF/VA VDD line and a DGND line.

In some embodiments, as shown in FIG. 28, the control unit 610 is electrically connected to the external terminal 620 through a plurality of lines, and the plurality of lines connected to the control unit 610 are respectively an SPI line, a DR_VDD line, a VCM VDD line, a DGND line, a DOVD line, an MCLK line, and the first control line 630. The photosensitive element 500 is electrically connected to the external terminal 620 through a plurality of lines, and the plurality of lines connected to the photosensitive element 500 are respectively the first control line 630, a high-speed data transmission line, an XVS line, an MCLK line, an RST line, a DOVD line, a DVDD line, an AVDD line, an AGND line, and a DGND line.

The control unit 610 and the photosensitive element 500 share at least a part of the first control line 630, the MCLK line, and the DOVD line; and the control unit 610 and the photosensitive element 500 of the lens driving apparatus 700 share at least a part of the DGND line. In this way, the circuit design of the camera module 300 can be further simplified.

As shown in FIG. 28, the external terminal 620 is electrically connected to the processor 800 through a plurality of lines, and the plurality of lines connected between the processor 800 and the external terminal 620 are respectively an AF/VA VDD line, a DR_VDD line, a VCM VDD line, an SPI line, the first control line 630, a high-speed data transmission line, an XVS line, an MCLK line, an RST line, a DOVD line, a DVDD line, an AVDD line, an AGND line, and a DGND line.

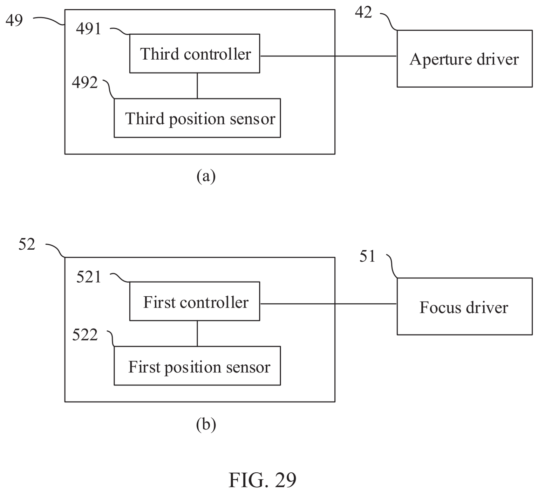

In some embodiments, as shown in FIG. 29, FIG. 29 is a diagram of composition of a first control unit 52 and a third control unit 49 in FIG. 28. The first control unit 52 includes a first controller 521 and a first position sensor 522, where the first position sensor 522 and the focus driver 51 are separately electrically connected to the first controller 521, and the first position sensor 522 is configured to detect a position of the lens carrier 3 relative to the moving base 2 in the axial direction Z.

The third control unit 49 includes a third controller 491 and a third position sensor 492, the third position sensor 492 and the aperture driver 42 are separately electrically connected to the third controller 491, and the third position sensor 492 is configured to detect a position of the aperture rotor 43 relative to the aperture base 41.

In this way, both the first control unit 52 and the third control unit 49 have a position detection function, so that control can be implemented in a plurality of manners for autofocus and adjustment of the F-number of the variable aperture 4. A first manner is separate control, that is, the control unit 610 is used as the calculation module of the focus driving device 5 and the calculation module of the variable aperture 4, and the first control unit 52 and the third control unit 49 only perform drive signal output and position sensing. A second manner is integrated control, that is, the first control unit 52 and the third control unit 49 not only perform control algorithm processing and calculation, but also perform drive signal output and position sensing. Specifically, the first control unit 52 can implement closed-loop control on the focus driver 51 based on data detected by the first position sensor 522, and the third control unit 49 can implement closed-loop control on the aperture driver 42 based on data detected by the third position sensor 492.

The first position sensor 522 and the third position sensor 492 may each be one of the following sensors: a Hall effect sensor (Hall effect sensor, Hall for short) and a TMR (tunnel magnetoresistance effect) sensor.

In some embodiments, as shown in FIG. 27 and FIG. 28, the image stabilization driving device 6 is electrically connected to the control unit 610.

Specifically, as shown in FIG. 21, FIG. 22, and FIG. 28, the image stabilization driving device 6 includes an image stabilization driver 61 and a second position sensor 60, the image stabilization driver 61 is configured to drive the moving base 2 to move relative to the base 1 in the direction perpendicular to the axial direction Z, and the second position sensor 60 is configured to detect a position of the moving base 2 relative to the base 1 in the direction perpendicular to the axial direction Z. The second pin 16 includes a plurality of sub-pins 161, a part of the sub-pins 161 are electrically connected to the second position sensor 60, and another part of the sub-pins 161 are electrically connected to the image stabilization driver 61.

The control unit 610 is configured to calculate, during image stabilization, a required movement amount of the moving base 2 based on position data that is of the moving base 2 and that is detected by the second position sensor 60, and then send a drive signal to the image stabilization driver 61, so that the image stabilization driver 61 works.

The image stabilization driver 61 and the second position sensor 60 of the image stabilization driving device 6 are electrically connected to the control unit 610. In this way, the image stabilization driving device 6 may be controlled by the control unit 610, and the control unit 610 may control, based on data detected by the second position sensor 60, the image stabilization driver 61 to work. Therefore, the image stabilization driving device 6 does not need to be configured with a control component, thereby simplifying a structure of the image stabilization driving device 6.

As shown in FIG. 28, a part of the sub-pins 161 are electrically connected to the second position sensor 60 and the control unit 610 through first signal lines, and another part of the sub-pins 161 are electrically connected to the image stabilization driver 61 and the control unit 610 through second signal lines (signal lines coil+ and coil- shown in the figure). The first signal line includes an input signal line (signal lines IN+ and IN- in the figure) and an output signal line (signal lines OUT+ and OUT- in the figure).

The second position sensor 60 may be one of the following sensors: a Hall effect sensor (Hall effect sensor, Hall for short) and a TMR (tunnel magnetoresistance effect) sensor.

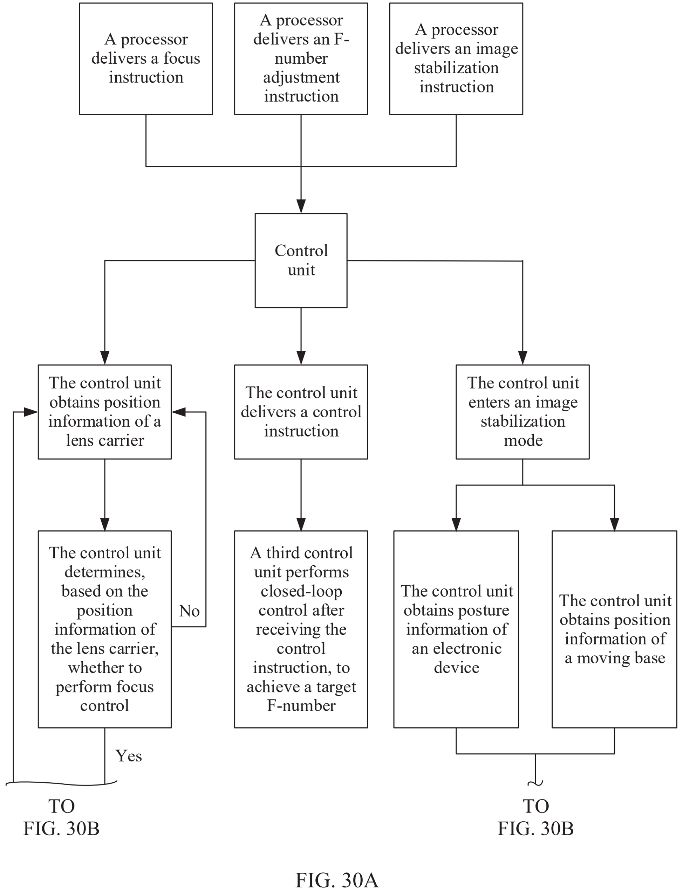

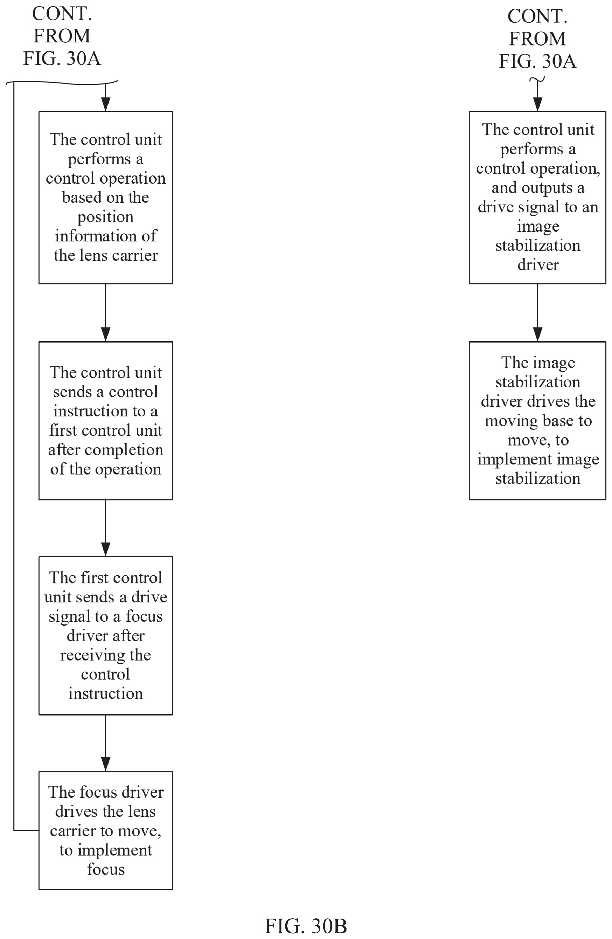

The following describes a control flow of the camera module 300 in the first embodiment of this application. Specifically, as shown in FIG. 30A and FIG. 30B, FIG. 30A and FIG. 30B are a control flowchart of a camera module 300 according to a first embodiment of this application.

Focus control: The processor 800 sends a focus instruction to the control unit 610, and the control unit 610 obtains position information of the lens carrier 3, and then determines, based on the position information of the lens carrier 3, whether focus control needs to be performed. If focus control needs to be performed, the control unit 610 performs a control operation based on the position information of the lens carrier 3, and sends a control instruction to the first control unit 52 after the operation is completed. After receiving the control instruction, the first control unit 52 sends a drive signal to the focus driver 51, and then the focus driver 51 drives the lens carrier 3 to perform focusing. If the focus control does not need to be performed, the control unit 610 continues to obtain the position information of the lens carrier 3 and determines whether to perform focus control.

The position information of the lens carrier 3 may be detected by the first position sensor 522.

Control of the variable aperture 4: The processor 800 sends an F-number adjustment instruction to the control unit 610, the control unit 610 sends a control instruction to the third control unit 49, and after receiving the control instruction, the third control unit 49 performs closed-loop control of the aperture driver 42, to achieve a target F-number.

Image stabilization control: The processor 800 sends an image stabilization instruction to the control unit 610, the control unit 610 enters an image stabilization mode, the control unit 610 obtains posture information of the electronic device and position information of the moving base 2, and then the control unit 610 performs a control operation based on the posture information of the electronic device and the position information of the moving base 2, and outputs a drive signal to the image stabilization driver 61. Then, the image stabilization driver 61 drives the moving base 2 to move, to implement image stabilization.

The posture information of the electronic device may be detected by the gyroscope 900.

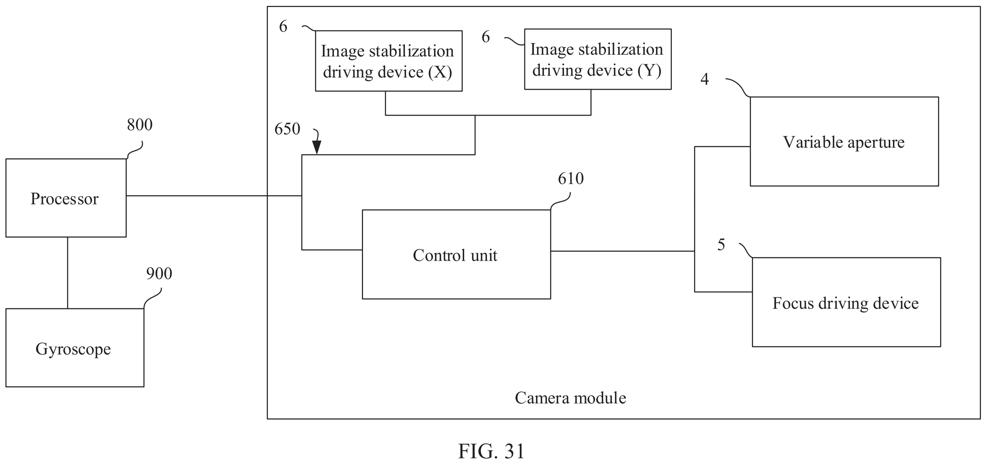

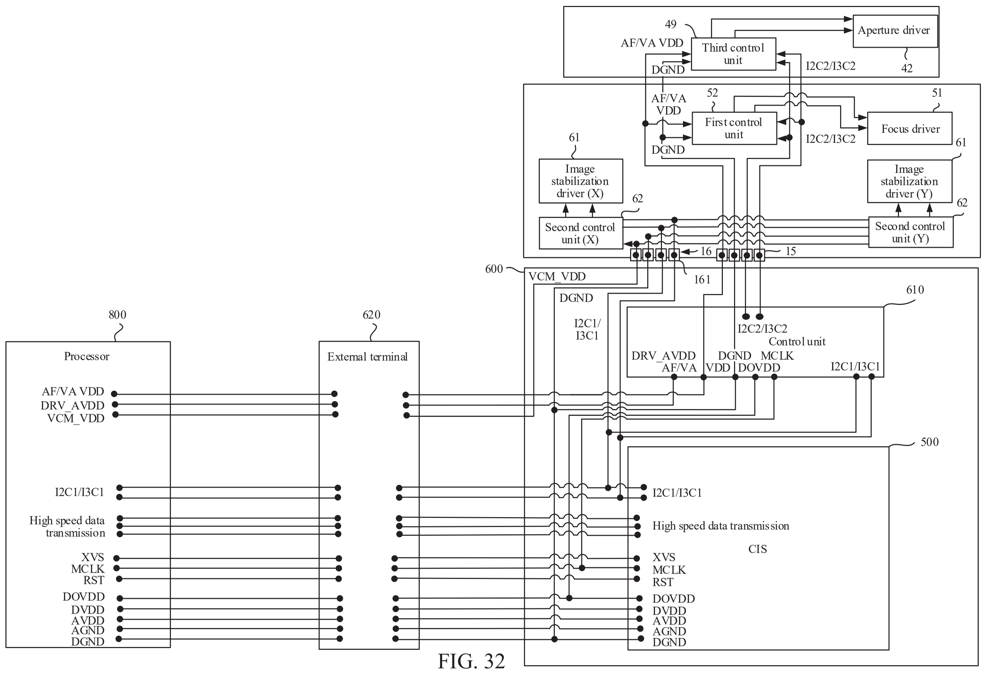

FIG. 31 is an architectural diagram of a connection between a camera module 300 according to a second embodiment of this application and a processor 800 of an electronic device. FIG. 32 is a schematic of a circuit connection between a camera module 300 according to a second embodiment of this application and a processor 800 of an electronic device. A main difference between the camera module 300 in the second embodiment and the camera module 300 in the first embodiment mainly lies in that: composition of the image stabilization driving device 6 and a connection manner between the image stabilization driving device 6 and the module circuit board 600 are different, which are specifically described as follows.

As shown in FIG. 31 and FIG. 32, a control unit 610 and an external terminal 620 are disposed on the module circuit board 600, the control unit 610 is separately electrically connected to the external terminal 620, and the variable aperture 4 and the focus driving device 5 of the lens driving apparatus 700, the image stabilization driving device 6 of the lens driving apparatus 700 is electrically connected to the external terminal 620 through a first connection wire 650 on the module circuit board 600, and the external terminal 620 is electrically connected to the processor 800.

As shown in FIG. 32, the image stabilization driving device 6 includes a second control unit 62 and an image stabilization driver 61 electrically connected to the second control unit 62. The image stabilization driver 61 is configured to drive the moving base 2 to move relative to the base 1 in the direction perpendicular to the axial direction Z. The second control unit 62 is configured to send a drive signal to the image stabilization driver 61, so that the image stabilization driver 61 works. The second pin 16 includes a plurality of sub-pins 161, and each sub-pin 161 is electrically connected to the second control unit 62. The second pin 16 is electrically connected to the external terminal 620 through the first connection wire 650.

In this embodiment, the image stabilization driver 61 is controlled by the second control unit 62 instead of the control unit 610, which can reduce an operation amount of the control unit 610, thereby helping the control unit 610 better control the variable aperture 4 and the focus driving device 5. Because all sub-pins 161 of the second pin 16 are electrically connected to the second control unit 62, a quantity of components connected to the second pin 16 and the image stabilization driving device 6 is reduced, thereby reducing a quantity of sub-pins 161 of the second pin 16, and simplifying the circuit design of the camera module 300.

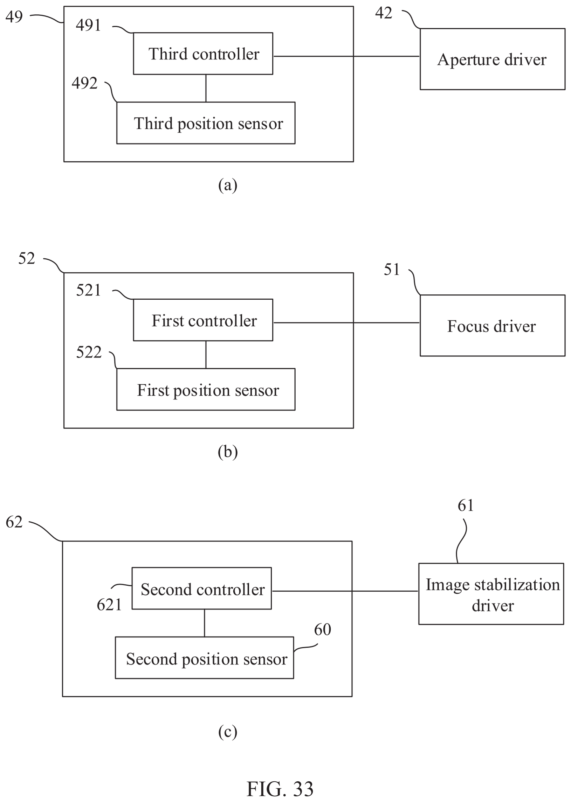

In some embodiments, as shown in FIG. 33, FIG. 33 is a diagram of composition of a first control unit 52, a second control unit 62, and a third control unit 49 in FIG. 32. The second control unit 62 includes a second controller 621 and a second position sensor 60, the second position sensor 60 and the image stabilization driver 61 are separately electrically connected to the second controller 621, and the second position sensor 60 is configured to detect a position of the moving base 2 relative to the base 1 in the direction perpendicular to the axial direction Z.

Because the second control unit 62 includes the second controller 621 and the second position sensor 60, that is, the second control unit 62 has a position detection function, the second control unit 62 can implement closed-loop control on the image stabilization driver 61 based on the data detected by the second position sensor 60, so that image stabilization control of the image stabilization driving device 6 is more accurate.

In some embodiments, as shown in FIG. 21, FIG. 22, and FIG. 32, the first side edge 131 or the second side edge 132 is provided with a second pin 16, and the second pin 16 is separately electrically connected to the image stabilization driving devices 6 (that is, image stabilization driving devices 6 on left and right sides in FIG. 32) located on the first side edge 131 and the second side edge 132. In this way, the image stabilization driving devices 6 located on the first side edge 131 and the second side edge 132 share the second pin 16. In this way, a quantity of sub-pins 161 of the second pin 16 can be reduced, thereby further simplifying the circuit design of the camera module 300.

In some embodiments, as shown in FIG. 31 and FIG. 32, the first connection wire 650 includes an I2C/I3C line, a VCM VDD line, and a DGND line. The image stabilization driving device 6 and the photosensitive element 500 share at least a part of the I2C/I3C line and the DGND line. In this way, the circuit design of the camera module 300 can be further simplified.

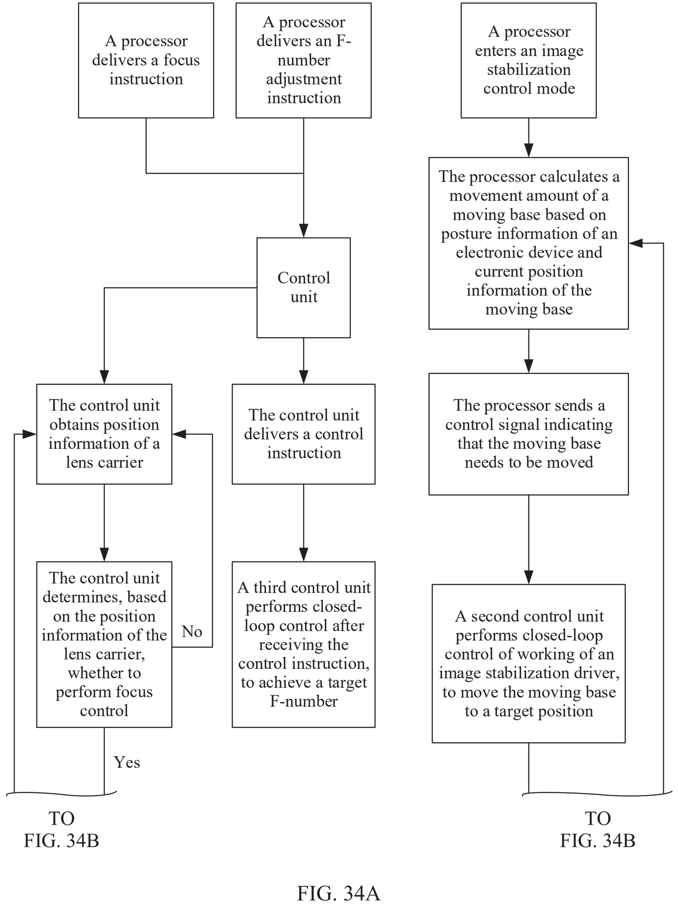

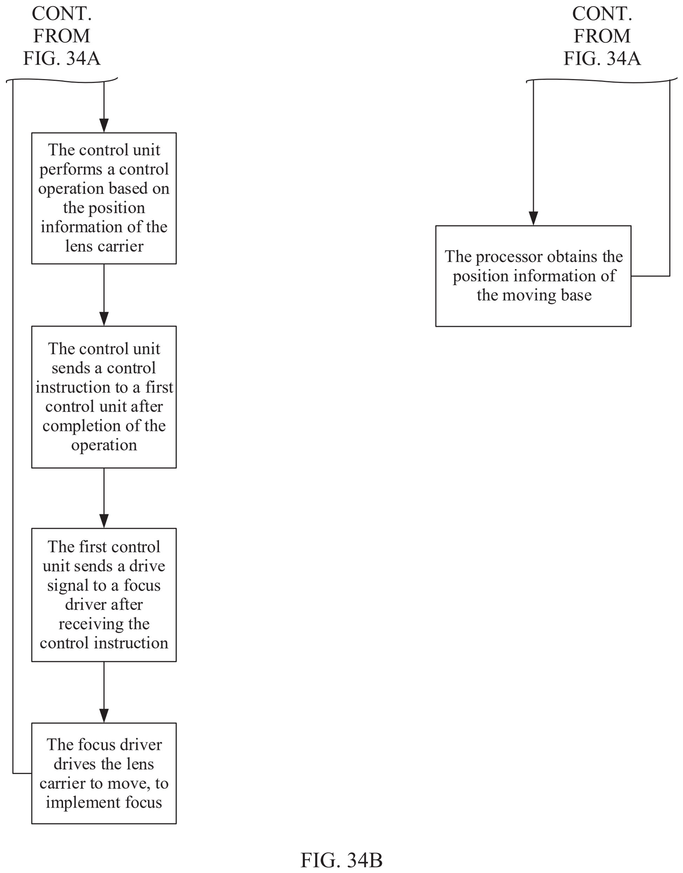

The following describes a control flow of the camera module 300 in the second embodiment of this application. Specifically, as shown in FIG. 34A and FIG. 34B, FIG. 34A and FIG. 34B are a control flowchart of a camera module 300 according to a second embodiment of this application.

Focus control: The processor 800 sends a focus instruction to the control unit 610, and the control unit 610 obtains position information of the lens carrier 3, and then determines, based on the position information of the lens carrier 3, whether focus control needs to be performed. If focus control needs to be performed, the control unit 610 performs a control operation based on the position information of the lens carrier 3, and sends a control instruction to the first control unit 52 after the operation is completed. After receiving the control instruction, the first control unit 52 sends a drive signal to the focus driver 51, and then the focus driver 51 drives the lens carrier 3 to perform focusing. If the focus control does not need to be performed, the control unit 610 continues to obtain the position information of the lens carrier 3 and determines whether to perform focus control.

The position information of the lens carrier 3 may be detected by the first position sensor 522.

Control of the variable aperture 4: The processor 800 sends an F-number adjustment instruction to the control unit 610, the control unit 610 sends a control instruction to the third control unit 49, and after receiving the control instruction, the third control unit 49 performs closed-loop control of the aperture driver 42, to achieve a target F-number.

Image stabilization control: After the processor 800 enters the image stabilization control mode, the processor 800 calculates a current movement amount of the moving base 2 based on the posture information of the electronic device and the position information of the moving base 2, and then, the processor 800 sends a control signal indicating that the moving base 2 needs to be moved. After receiving the control signal, the second control unit 62 performs closed-loop control of working of the image stabilization driver 61, to move the moving base 2 to a target position. Then, the processor 800 obtains the position information of the moving base 2, to perform a next round of image stabilization control.

The posture information of the electronic device may be detected by the gyroscope 900.

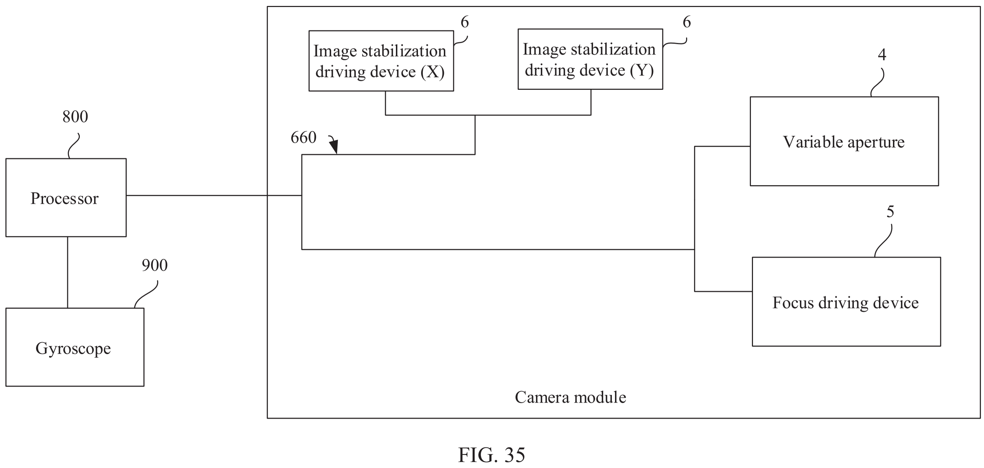

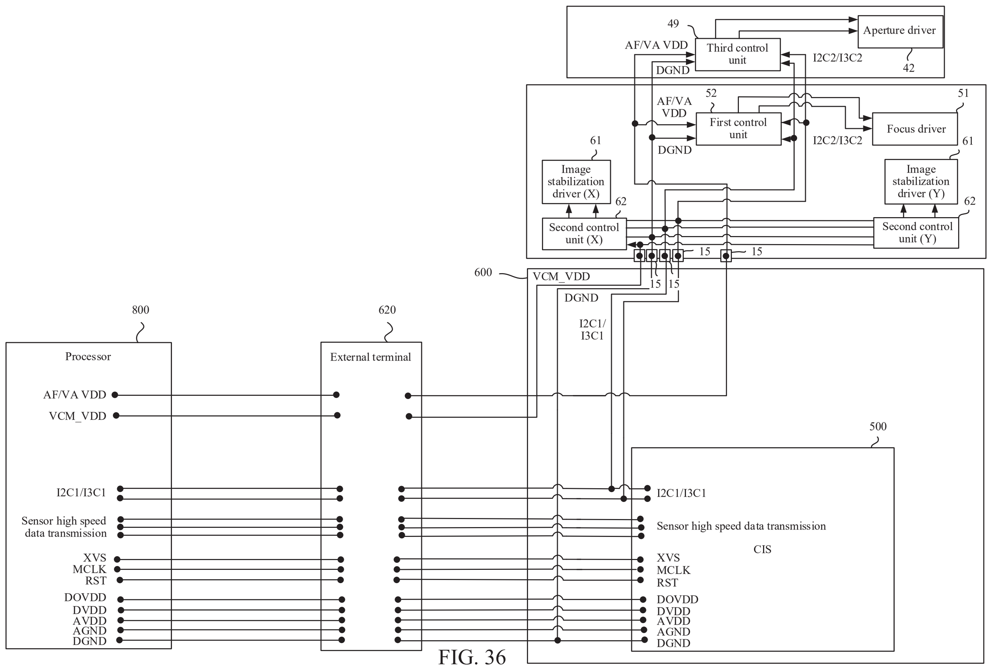

FIG. 35 is an architectural diagram of a connection between a camera module 300 according to a third embodiment of this application and a processor 800 of an electronic device. FIG. 36 is a schematic of a circuit connection between a camera module 300 according to a third embodiment of this application and a processor 800 of an electronic device. A main difference between the camera module 300 in the second embodiment and the camera module 300 in the second embodiment lies in that: connection manners between pins and each of the variable aperture 4, the focus driving device 5, and the image stabilization driving device 6 are different, which are specifically described as follows.

As shown in FIG. 35 and FIG. 36, an external terminal 620 is disposed on the module circuit board 600, the variable aperture 4, the focus driving device 5, and the image stabilization driving device 6 of the lens driving apparatus 700 are electrically connected to the external terminal 620 through a second connection wire 660 on the module circuit board 600, and the external terminal 620 is electrically connected to the processor 800.

As shown in FIG. 35, the focus driving device 5 includes the first control unit 52 and the focus driver 51 electrically connected to the first control unit 52. The focus driver 51 is configured to drive the lens carrier 3 to move relative to the moving base 2 along an axis of the variable aperture 4. The first control unit 52 is configured to send a drive signal to the focus driver 51, so that the focus driver 51 works.

The image stabilization driving device 6 includes a second control unit 62 and an image stabilization driver 61 electrically connected to the second control unit 62. The image stabilization driver 61 is configured to drive the moving base 2 to move relative to the base 1 in the direction perpendicular to the axial direction Z. The second control unit 62 is configured to send a drive signal to the image stabilization driver 61, so that the image stabilization driver 61 works.

The variable aperture 4 includes a third control unit 49 and an aperture driver 42 electrically connected to the third control unit 49. The aperture driver 42 is configured to drive the aperture rotor 43 to rotate relative to the aperture base 41. The third control unit 49 is configured to send a drive signal to the aperture driver 42 based on a target F-number to be achieved through adjustment, so that the aperture driver 42 works. The first control unit 52, the second control unit 62, and the third control unit 49 are all electrically connected to the external terminal 620 through the second connection wire 660.

In this embodiment, the variable aperture 4, the focus driving device 5, and the image stabilization driving device 6 are controlled by control modules of the variable aperture, the focus driving device, and the image stabilization driving device, and do not need to be controlled by a control unit 610 on the module circuit board 600. Therefore, no control unit 610 needs to be disposed on the module circuit board 600, thereby saving space on the module circuit board 600, simplifying circuit design on the module circuit board 600, and simplifying circuit design on the camera module 300.

In some embodiments, as shown in FIG. 36, the variable aperture 4 and the focus driving device 5 form a first module, and at least a part of the first pins 15 are shared pins of the first module and the second control unit 62. In this way, a number of pins of the lens driving apparatus 700 may be further reduced, thereby simplifying the circuit design of the camera module 300.

In some embodiments, as shown in FIG. 36, a part of the first pins 15 are shared pins, and are all electrically connected to the first control unit 52, the second control unit 62, and the third control unit 49, and another part of the first pins 15 are all electrically connected to the first control unit 52 and the third control unit 49.

The part of the first pins 15 are used as shared pins. In this way, a quantity of pins of the lens driving apparatus 700 can be reduced, and non-shared pins may be separately disposed for the first module and the image stabilization driving device 6 to meet different configuration requirements of the first module and the image stabilization driving device 6, for example, different configuration requirements of a power supply voltage.

For example, as shown in FIG. 36, there are four first pins 15, three first pins 15 are shared pins, the three shared pins are electrically connected to the first control unit 52, the second control unit 62, and the third control unit 49 through the I2C/I3C line and the DGND line, and the other first pin 15 is electrically connected to the first control unit 52 and the third control unit 49 through the AF/VA VDD line. A third pin is further disposed on the base 1, and the third pin is electrically connected to the second control unit 62 through the VCM VDD line. The second connection wire 660 includes an I2C/I3C line, a VCM VDD line, an AF/VA VDD line, and a DGND line.

In some embodiments, the first control unit 52 includes a first controller 521 and a first position sensor 522, where the first position sensor 522 and the focus driver 51 are separately electrically connected to the first controller 521, and the first position sensor 522 is configured to detect a position of the lens carrier 3 relative to the moving base 2 in the axial direction Z; the second control unit 62 includes a second controller 621 and a second position sensor 60, the second position sensor 60 and the image stabilization driver 61 are separately electrically connected to the second controller 621, and the second position sensor 60 is configured to detect a position of the moving base 2 in the direction perpendicular to the axial direction Z; and the third control unit 49 includes a third controller 491 and a third position sensor 492, the third position sensor 492 and the aperture driver 42 are separately electrically connected to the third controller 491, and the third position sensor 492 is configured to detect a position of the aperture rotor 43 relative to the aperture base 41.

In this way, the first control unit 52, the second control unit 62, and the third control unit 49 may have a position detection function. In this way, the first control unit 52 can implement closed-loop control on the focus driver 51 based on data detected by the first position sensor 522, the second control unit 62 can implement closed-loop control on the image stabilization driver 61 based on data detected by the second position sensor 60, and the third control unit 49 can implement closed-loop control on the aperture driver 42 based on data detected by the third position sensor 492. Therefore, focus control of the focus driving device 5, adjustment control of the F-number of the variable aperture 4, and image stabilization control of the image stabilization driving device 6 are more accurate.

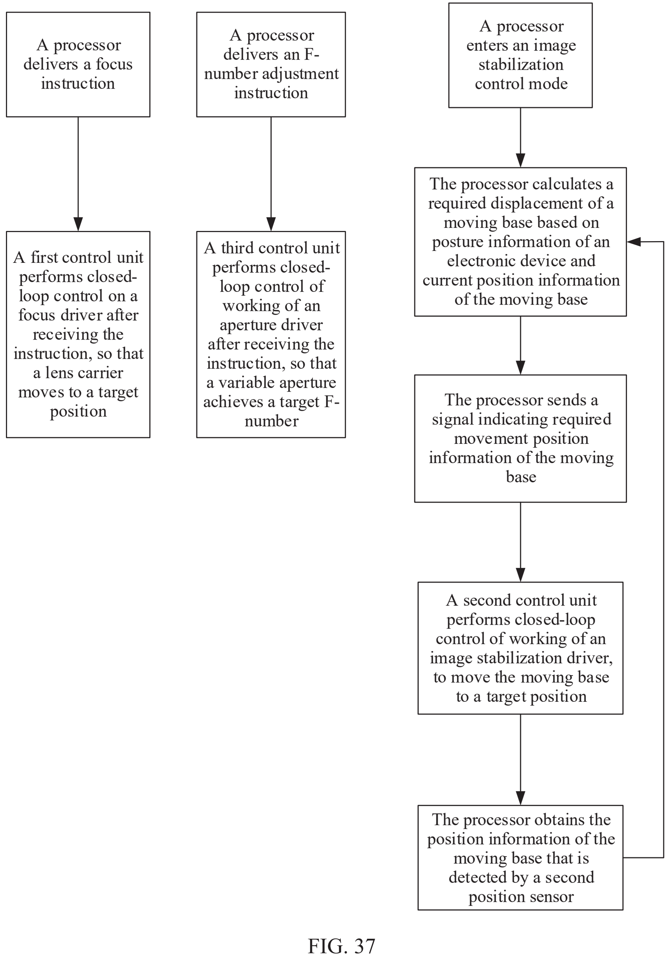

The following describes a control flow of the camera module 300 in the third embodiment of this application. Specifically, as shown in FIG. 37, FIG. 37 is a control flowchart of a camera module 300 according to a third embodiment of this application.

Focus control: The processor 800 sends a focus instruction, and after receiving the focus instruction, the first control unit 52 performs closed-loop control on the focus driver 51, so that the lens carrier 3 moves to a target position.

Control of the variable aperture 4: The processor 800 sends an F-number adjustment instruction to the control unit 610, the control unit 610 sends a control instruction to the third control unit 49, and after receiving the control instruction, the third control unit 49 performs closed-loop control of the aperture driver 42, so that the variable aperture 4 achieves a target F-number.

Image stabilization control: After the processor 800 enters the image stabilization control mode, the processor 800 calculates a current movement amount of the moving base 2 based on the posture information of the electronic device and the position information of the moving base 2, and then, the processor 800 sends a control signal indicating that the moving base 2 needs to be moved. After receiving the control signal, the second control unit 62 performs closed-loop control of working of the image stabilization driver 61, to move the moving base 2 to a target position. Then, the processor 800 obtains the position information of the moving base 2, to perform a next round of image stabilization control.

The posture information of the electronic device may be detected by the gyroscope 900.

A type of a sectional line in the accompanying drawings of this application is used to distinguish between different components, and should not be understood as a limitation on a component material. The accompanying drawings of this application are intended to show structural composition, and are not shown according to a proportion of an actual product.

Although this application is described with reference to some embodiments, it does not mean that a characteristic of this application is limited only to this implementation. On the contrary, a purpose of describing this application with reference to an implementation is to cover another option or modification that may be derived based on claims of this application. To provide an in-depth understanding of this application, the foregoing descriptions include many specific details. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In embodiments of this application, the terms "first", "second", and "third" are used only for describing purposes, and cannot be understood as an indication or implication of relative importance or an implication of a quantity of indicated technical features. Therefore, the features defined with "first", "second", and "third" may explicitly or implicitly include one or more of the features.

The term "and/or" in embodiments of this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A lens driving apparatus, comprising:
a base (1);
a moving base (2), disposed on the base (1);
a lens carrier (3), disposed on the moving base (2), wherein the lens carrier (3) is configured to mount an optical lens (400);
a variable aperture (4), disposed on a side, of the lens carrier (3), away from the base (1);
a focus driving device (5), configured to drive the lens carrier (3) to move relative to the moving base (2) in an axial direction (Z) of the variable aperture (4); and
an image stabilization driving device (6), configured to drive the moving base (2) to move relative to the base (1) in a direction perpendicular to the axial direction (Z), wherein
the base (1) has a plurality of corner portions (12) in a circumferential direction, at least two of the corner portions (12) are provided with first pins (15), the first pins (15) have a first connection terminal (151) and a second connection terminal (152), the first connection terminal (151) is electrically connected to the variable aperture (4) and the focus driving device (5) through a connection line (8), and the second connection terminal (152) is an external terminal.

2. The lens driving apparatus according to claim 1, wherein
the first pins (15) are embedded in the base (1), the first connection terminal (151) is exposed from a surface of the base (1) and is connected to the connection line (8), and the second connection terminal (152) extends out of the base (1).

3. The lens driving apparatus according to claim 1 or 2, wherein
the connection line (8) comprises:
a connection contact (81), connected to the first connection terminal (151);
a first terminal (82), disposed on the moving base (2), wherein the first terminal (82) is electrically connected to the connection contact (81) through a first elastic wire (84), and the first terminal (82) is electrically connected to the focus driving device (5) through a focus wire (85); and
a second terminal (83), disposed on the lens carrier (3) and electrically connected to the variable aperture (4), wherein the second terminal (83) is electrically connected to the first terminal (82) through a second elastic wire (86).

4. The lens driving apparatus according to claim 3, wherein
the connection line (8) further comprises a conversion terminal (87) and a conversion wire (88), wherein the conversion terminal (87) is disposed on the moving base (2), the conversion wire (88) is connected between the first terminal (82) and the conversion terminal (87), and the second elastic wire (86) is connected between the conversion terminal (87) and the second terminal (83).

5. The lens driving apparatus according to claim 4, wherein
the conversion wire (88) is at least partially embedded in the moving base (2).

6. The lens driving apparatus according to any one of claims 3 to 5, wherein
the focus driving device (5) comprises a first control unit (52) and a focus driver (51) electrically connected to the first control unit (52), wherein the focus driver (51) is configured to drive the lens carrier (3) to move relative to the moving base (2) in the axial direction (Z), the focus wire (85) is electrically connected to the first control unit (52), and the first control unit (52) is disposed on a side wall of the moving base (2).

7. The lens driving apparatus according to claim 6, wherein
the focus wire (85) is embedded in the moving base (2), the focus wire (85) is provided with a control unit connection terminal (851), and the control unit connection terminal (851) is exposed from the side wall of the moving base (2) and is electrically connected to the first control unit (52).

8. The lens driving apparatus according to any one of claims 1 to 7, wherein
a side edge (13) of the base (1) is provided with a second pin (16), the second pin (16) is electrically connected to the image stabilization driving device (6), the side edge (13) is further provided with first pins (15), and the first pins (15) are separately disposed at corner portions (12) on two sides of the second pin (16).

9. The lens driving apparatus according to claim 8, wherein
the side edge (13) comprises a first side edge (131) and a second side edge (132) that are adjacently disposed;
image stabilization driving devices (6) are respectively disposed on the first side edge (131) and the second side edge (132), the image stabilization driving device (6) on the first side edge (131) is configured to drive the moving base (2) to move relative to the base (1) in a first direction (X), the image stabilization driving device (6) on the second side edge (132) is configured to drive the moving base (2) to move relative to the base (1) in a second direction (Y), and the first direction (X), the second direction (Y), and the axial direction (Z) are mutually perpendicular; and
the first side edge (131) and the second side edge (132) are respectively provided with second pins (16), the second pin (16) and the image stabilization driving device (6) that are located on the first side edge (131) are electrically connected, and the second pin (16) and the image stabilization driving device (6) that are located on the second side edge (132) are electrically connected.

10. The lens driving apparatus according to claim 8 or 9, wherein
the image stabilization driving device (6) comprises an image stabilization driver (61) and a second position sensor (60), the image stabilization driver (61) is configured to drive the moving base (2) to move relative to the base (1) in the direction perpendicular to the axial direction (Z), and the second position sensor (60) is configured to detect a position of the moving base (2) relative to the base (1) in the direction perpendicular to the axial direction (Z); and
the second pin (16) comprises a plurality of sub-pins (161), a part of the sub-pins (161) are electrically connected to the second position sensor (60), and another part of the sub-pins (161) are electrically connected to the image stabilization driver (61).

11. The lens driving apparatus according to claim 8, wherein
the side edge (13) comprises a first side edge (131) and a second side edge (132) that are adjacently disposed;
image stabilization driving devices (6) are respectively disposed on the first side edge (131) and the second side edge (132), the image stabilization driving device (6) on the first side edge (131) is configured to drive the moving base (2) to move relative to the base (1) in a first direction (X), the image stabilization driving device (6) on the second side edge (132) is configured to drive the moving base (2) to move relative to the base (1) in a second direction (Y), and the first direction (X), the second direction (Y), and the axial direction (Z) are mutually perpendicular; and
the first side edge (131) or the second side edge (132) is provided with a second pin (16), and the second pin (16) is separately electrically connected to the image stabilization driving devices (6) located on the first side edge (131) and the second side edge (132).

12. The lens driving apparatus according to claim 8 or 11, wherein
the image stabilization driving device (6) comprises a second control unit (62) and an image stabilization driver (61) electrically connected to the second control unit (62), wherein the image stabilization driver (61) is configured to drive the moving base (2) to move relative to the base (1) in the direction perpendicular to the axial direction (Z), the second pin (16) comprises a plurality of sub-pins (161), and each sub-pin (161) is electrically connected to the second control unit (62).

13. The lens driving apparatus according to claim 12, wherein
the second control unit (62) comprises a second controller (621) and a second position sensor (60), the second position sensor (60) and the image stabilization driver (61) are separately electrically connected to the second controller (621), and the second position sensor (60) is configured to detect a position of the moving base (2) relative to the base (1) in the direction perpendicular to the axial direction (Z).

14. The lens driving apparatus according to any one of claims 1 to 7, wherein
the variable aperture (4) and the focus driving device (5) form a first module, and at least a part of the first pins (15) are shared pins of the first module and the image stabilization driving device (6).

15. The lens driving apparatus according to claim 14, wherein
the focus driving device (5) comprises the first control unit (52) and the focus driver (51) electrically connected to the first control unit (52), wherein the focus driver (51) is configured to drive the lens carrier (3) to move relative to the moving base (2) in the axial direction (Z);
the image stabilization driving device (6) comprises a second control unit (62) and an image stabilization driver (61) electrically connected to the second control unit (62), wherein the image stabilization driver (61) is configured to drive the moving base (2) to move relative to the base (1) in the direction perpendicular to the axial direction (Z);
the variable aperture (4) comprises a third control unit (49) and an aperture driver (42) electrically connected to the third control unit (49), wherein the aperture driver (42) is configured to drive the variable aperture (4) to change a light flux; and
a part of the first pins (15) are shared pins, and are all electrically connected to the first control unit (52), the second control unit (62), and the third control unit (49), and another part of the first pins (15) are all electrically connected to the first control unit (52) and the third control unit (49).

16. The lens driving apparatus according to claim 15, wherein
the first control unit (52) comprises a first controller (521) and a first position sensor (522), wherein the first position sensor (522) and the focus driver (51) are separately electrically connected to the first controller (521), and the first position sensor (522) is configured to detect a position of the lens carrier (3) relative to the moving base (2) in the axial direction (Z);
the second control unit (62) comprises a second controller (621) and a second position sensor (60), the second position sensor (60) and the image stabilization driver (61) are separately electrically connected to the second controller (621), and the second position sensor (60) is configured to detect a position of the moving base (2) in the direction perpendicular to the axial direction (Z);
the variable aperture (4) comprises an aperture base (41), an aperture rotor (43) disposed on the aperture base (41), and a blade (44) disposed on the aperture rotor (43), wherein the aperture driver (42) is configured to drive the aperture rotor (43) to rotate relative to the aperture base (41), and the blade (44) is movable along with the aperture rotor (43) to change the light flux; and
the third control unit (49) comprises a third controller (491) and a third position sensor (492), the third position sensor (492) and the aperture driver (42) are separately electrically connected to the third controller (491), and the third position sensor (492) is configured to detect a position of the aperture rotor (43) relative to the aperture base (41).

17. A camera module, comprising an optical lens (400), a photosensitive element (500), a module circuit board (600), and the lens driving apparatus (700) according to any one of claims 1 to 16, wherein the lens driving apparatus (700) and the photosensitive element (500) are both disposed on the module circuit board (600), and the photosensitive element (500) is located on an image side of the optical lens (400).

18. The camera module according to claim 17, wherein
a control unit (610) and an external terminal (620) are disposed on the module circuit board (600), and the control unit (610) is separately electrically connected to the external terminal (620), and the variable aperture (4), the focus driving device (5), and the image stabilization driving device (6) of the lens driving apparatus (700).

19. The camera module according to claim 17, wherein
a control unit (610) and an external terminal (620) are disposed on the module circuit board (600), the control unit (610) is separately electrically connected to the external terminal (620), and the variable aperture (4) and the focus driving device (5) of the lens driving apparatus (700), and the image stabilization driving device (6) of the lens driving apparatus (700) is electrically connected to the external terminal (620) through a first connection wire (650) on the module circuit board (600).

20. The camera module according to claim 17, wherein
an external terminal (620) is disposed on the module circuit board (600), and the variable aperture (4), the focus driving device (5), and the image stabilization driving device (6) of the lens driving apparatus (700) are electrically connected to the external terminal (620) through a second connection wire (660) on the module circuit board (600).

21. An electronic device, comprising a housing (200) and the camera module (300) according to any one of claims 17 to 20, wherein the camera module (300) is disposed on the housing (200).

22. An electronic device, comprising a processor (800) and the camera module (300) according to any one of claims 18 to 20, wherein the external terminal (620) of the camera module (300) is electrically connected to the processor (800).
